# EUROPEAN PATENT SPECIFICATION

(11) **EP 0 510 639 B1**
(45) Date of publication and mention of the grant of the patent: **26.08.1998**
(21) Application number: 92106944.9
(22) Date of filing: 23.04.1992
(51) Int. Cl.: G11B 20/10, G11B 27/034, H04N 5/92, G10H 1/00, G06F 17/00

(54) **Digital recorder**
Digitales Aufzeichnungsgerät
Enregistreur numérique

(30) Priority: 26.04.1991 JP 96754/91; 24.05.1991 JP 119853/91
(43) Date of publication of application: 28.10.1992
(73) Proprietor: CASIO COMPUTER COMPANY LIMITED, Shinjuku-ku Tokyo 160 (JP)
(72) Inventor: Iizuka, Nobuo, c/o Patent Dep., Development Div., Sakae-cho, Hamura-shi, Tokyo 190-11 (JP); Manabe, Hajime, c/o Patent Dep., Development Div., Sakae-cho, Hamura-shi, Tokyo 190-11 (JP)
(74) Representative: KUHNEN, WACKER & PARTNER

(56) References cited:
- EP-A- 0 268 270
- EP-A- 0 390 049
- EP-A- 0 459 157

## Description

The present invention relates to a digital recorder capable of digitally recording, reproducting or editing a digital signal such as an audio signal (voice signal) and a video signal.

In the conventional apparatus, only audio data and sequencer data (MIDI data) are recorded/reproduced by special purpose recorders. Although attempts have been made to integrate these data and video data to record/reproduce them and to integrate and edit these data, only unsatisfactory results have been obtained so far.

EP-A-0 390 049 discloses a multimedia recorder as defined in the preamble of claim 1 having at least a first I/O means for performing I/O operation for a first type of data and second I/O means for performing an I/O operation for data having a second type of data different from the first type. Buffer means are used for performing data transfer to the first and second I/O means to store data in units of the first and second types of data. In addition an external RAM means is provided for transferring first and second types of data from the external memory means to the buffer means, wherein the external memory means uses storage areas from/in which the first and second types of data are read/written. Finally data transfer means for executing data transfer between the first and second I/O means the buffer means and the external memory means are provided.

In order to integrally record/reproduce the two different types of data this document uses a synchronizing operation. In details in order to continuously store audio and picture information this information is divided into a plurality of blocks. while the tranfer time of each block of audio data has to become the same as the transfer time of a plurality of blocks of the picture data.

It is therefore an object of the present invention to provide a multimedia recorder having a relatively simple arrangement and in which editing processing can be efficiently performed.

The above object is achieved by the features of claim 1.

According to an arrangement of the present invention, there is provided a multimedia recorder comprising first input/output means for performing an input/output operation for a first type of data, second input/output means for performing an input/output operation for data having a type different from the first type, buffer means capable of performing data transfer to the first and second input/output means and storing data in units of types, random access type external memory means capable of transferring the first and second types of data to the buffer means and having storage areas from/in which the first and second types of data can be read/written, and data transfer means for time-divisionally executing data transfer between the first and second input/output means and the buffer means and data transfer between the buffer means and the external memory means in a predetermined priority order.

That is, the buffer means is arranged between the external memory means and the input/output means, and data transfer between the buffer means and the input/output means and data transfer between the buffer means and the external memory means are sequentially and time-divisionally performed by the data transfer means in a predetermined priority order.

For example, the first input/output means is in charge of input/output control of audio data, whereas the second input/output means is in charge of input/output control of video data and sequencer data.

Audio data or video data is recorded or reproduced in or from the buffer means at a sampling timing. Sequencer data is recorded or reproduced in or from the buffer means in synchronism with the change timing of the sequencer data.

In practice, the data transfer means can be realized by a DMA (Direct Memory Access) controller. For example, in practice, the data transfer means executes data transfer in response to a data transfer request signal from each input/output means or the external memory means.

As the external memory means, various types of storage media can be used. However, a random access type storage medium such as a hard disk or an optomagnetic disk is preferably used.

According to the above-described arrangement, various types of data can be recorded/reproduced as integral data, and editing can be efficiently executed.

It would be apparent for those skilled in the art from the following description of preferred embodiments that the present invention may be modified in various other manners as well as applied to different cases.

This invention can be more fully understood from the following detailed description when taken in conjunction with the accompanying drawings, in which:
Fig. 1 is a circuit diagram showing the general structure of a multimedia recorder according to the third embodiment of the present invention;
Fig. 2 is a view showing the data format of a hard disk 12 in Fig. 1;
Figs. 3(a) and 3(b) are timing charts showing an input/output operation for audio data;
Figs. 4(a) and 4(b) are timing charts showing an input/output operation for the MIDI data;
Figs. 5(a) and 5(b) are timing charts showing an input/output operation for video data;
Fig. 6 is a timing chart showing a data transfer state between a hard disk and buffers;
Figs. 7(a) and 7(b) are views showing an operation state in which editing processing of each track is performed by the embodiment;
Fig. 8 is a circuit diagram showing the general structure of an automatic performance apparatus according to the fourth embodiment of the present invention;
Fig. 9 is a circuit diagram showing the arrangement of a DMAC 2025;
Fig. 10 is a flow chart showing the overall operations of a CPU 2011 of a computer section 2001;
Fig. 11 is a flow chart showing an operation of the CPU 2011 of the computer section 2001 in an automatic performance;
Fig. 12 is a view showing the format and contents of data to be stored in a hard disk 2008 in Fig. 8;
Fig. 13 is a view showing a screen to be displayed on a display device to allow section of a music;
Fig. 14 shows musical scores to be displayed on the display device in accordance with a performance of a music;
Fig. 15 shows, in (a) and (b), video (character) images to be displayed in accordance with a performance of a music;
Fig. 16 is a flow chart showing the overall operations of a CPU 2021 of a storing/reproducing section 2002 in Fig. 8;
Fig. 17 is a flow chart showing an interrupt routine of the CPU 2021 of the storing/reproducing section 2002;
Fig. 18 is a flow chart showing operations of audio input/output devices 2022-1 of the storing/reproducing section 2002 in Fig. 8;
Fig. 19 is a flow chart showing an operation of an audio input/output device 2023 of the storing/reproducing section 2002 in Fig. 8;
Fig. 20 is a timing chart showing a track recoding/reproducing operation of the storing/reproducing section 2002 in Fig. 8;
Fig. 21 is a flow chart showing an operation of the DMAC 2025 of the storing/reproducing section 2002 in Fig. 8;
Fig. 22 is a flow chart showing an operation of an HDC 2026 of the storing/repdocuding section 2002 in Fig. 8;
Fig. 23 is a view showing a state in which a tract recording/reproducing operation of the storing/reproducing section 2002 in Fig. 8 is performed; and
Fig. 24 is a view showing a schedule table for a track reproducing operation of the storing/repeoducing section 2002 in Fig. 8.

### First Embodiment

### <General structure>

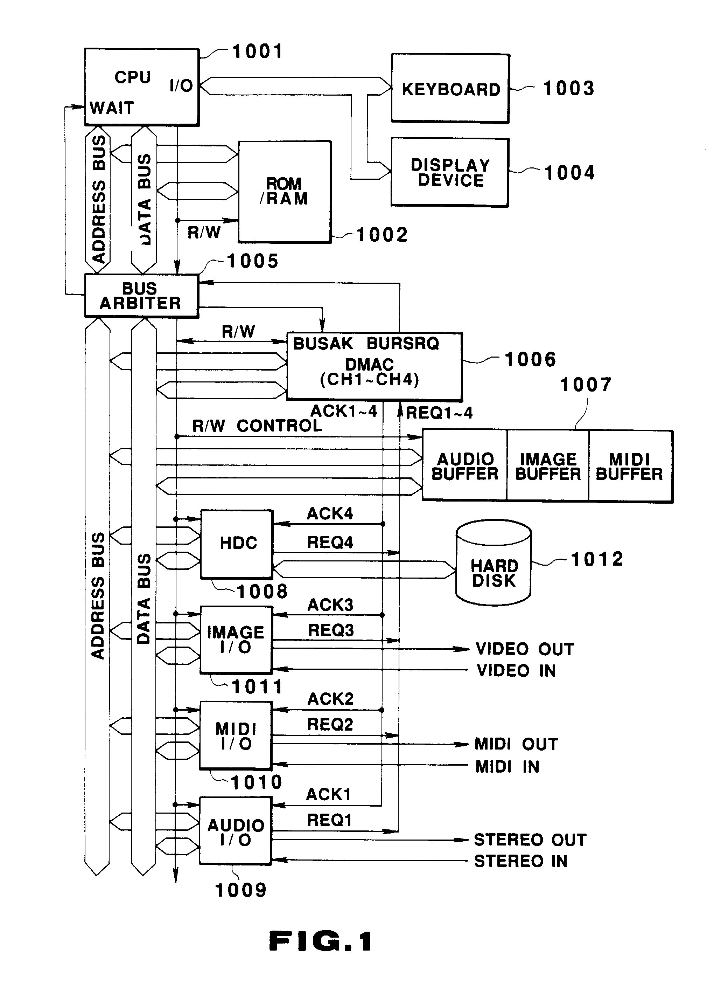

Fig. 1 shows the general structure of the first embodiment. In this embodiment, stereophonic audio data, sequencer data (MIDI data), and video (image) data can be integrally recorded/reproduced and edited.

Of these data, audio data must be transferred periodically (at a sampling timing). Sequencer data must be transferred non-periodically (when the contents of the sequencer data are changed). Video data needs to be transferred periodically or non-periodically in a large amount.

In this embodiment, transfer operations of data in different data transfer amounts and at different data transfer rates can be handled.

More specifically, reference numeral 1001 denotes a CPU, which controls the overall operations of the embodiment and is operated in accordance with programs stored in a ROM/RAM 1002. In addition, the CPU 1001 designates read/write areas of a hard disk 1012 (to be described later) and edits data by using predetermined areas of the ROM/RAM 1002.

A keyboard 1003 and a display device 1004 are connected to the input/output terminal I/O of the CPU 1001. A user can designate an operation mode for each track (an audio track, a sequencer track, and a video track), and can designate various editing modes.

In a real-time operation (recording/reproduction of data), the CPU 1001 controls each constituent element (to be described later) only for the idle time of address and data buses. Such bus control is performed by a bus arbiter 1005. A wait signal WAIT is kept supplied to the CPU 1001 until the buses can be used.

The bus arbiter 1005, a DMAC (DMA controller) 1006, a buffer section 1007, an HDC (hard disk controller) 1008, an audio I/O (input/output interface) 1009, a MIDI I/O (input/output interface) 1010, and an image I/O (input/output interface) 1011 are connected to each other.

The DMAC 1006 is constituted by four channels CH1 to CH4. The channel CH1 serves to execute DMA transfer between an audio buffer (of a ring buffer type, in which audio data corresponding to a plurality of sampling operations can be stored) and the audio I/O 1009. The channel CH2 executes DMA transfer between a MIDI buffer (of a ring buffer type, in which the MIDI data corresponding to a plurality of events can be stored) and the MIDI I/O 1010. The channel CH3 performs DMA transfer between an image buffer (in which image data corresponding to at least one frame can be temporarily stored) and the video I/O 1011.

The channel CH4 serves to perform data transfer (DMA transfer) between each area in the buffer section 1007 and a corresponding area in the hard disk 1012. That is, data transfer between the hard disk 1012 and the buffer section 1007 is performed depending on whether a proper free space exists in an area designated by the buffer section 1007 in the data reproduction mode. In the record mode, such data transfer is performed depending on whether a proper data block to be transferred to the hard disk 1012 is formed in an area designated by the buffer section 1007.

The hard disk 1012 is connected to the HDC 1008. A data read/write operation with respect to the hard disk 1012 is performed under the control of the HDC 1008. Programming control for the HDC 1008 is performed by the CPU 1001 every time data transfer (corresponding to one block) is performed.

More specifically, the audio I/O 1009 is designed to exchange stereophonic audio signals (analog signals) with external devices. The audio I/O 1009 includes a D/A converter and an A/D converter and serves to receive an external analog signal upon converting it to a digital signal. In contrast to this, the audio I/O 1009 converts a stereophonic digital audio signal into an analog signal and outputs it to an external device. In addition, the audio I/O 1009 incorporates a data buffer having a capacity corresponding to one sampling operation. The audio I/O 1009 generates a DMA transfer request signal REQ1 to the DMAC 1006 in synchronism with a sampling clock (or may be operated in synchronism with an output from an incorporated clock generator or a sampling clock from an external device).

In response to the request signal REQ1, the channel CH1 of the DMAC 1006 requests (outputs a signal BUSRQ) the bus arbiter 1005 to pass control of the address and data buses to execute DMA transfer. Upon reception of an acknowledge signal BUSAK, the channel CH1 gains control of the address and data buses and performs DMA transfer. That is, the DMAC 1006 supplies an acknowledge signal ACK1 to the audio I/O 1009 to transfer audio data between the audio I/O 1009 and the voice buffer in the buffer section 1007. In addition, the DMAC 1006 outputs a predetermined read/write control signal R/W.

The MIDI I/O 1010 is designed to exchange the MIDI signal (MIDI message) with an external device. The MIDI I/O 1010 incorporates converters for performing parallel/serial conversion of the MIDI message output to a port MIDI OUT and serial/parallel conversion of the MIDI message received from a port MIDI IN, and a timer for controlling the input/output timing of the message MIDI.

In the reproduction mode, as will be described later, with the aid of this timer, the MIDI I/O 1010 outputs the MIDI data portion of a packet at a proper timing with respect to the previous MIDI output in accordance with interval data of the packet. In the record mode, interval data representing a time interval started when the previous MIDI data is input is added to the MIDI input by the MIDI I/O 1010, thus forming the input data into packet data.

Owing to the above-described function of the timer, the MIDI I/O 1010 generates a DMA transfer request signal REQ2 to the DMAC 1006 at a proper timing.

In response to the request signal REQ2, the DMAC 1006 requests (outputs the signal BUSRQ) the bus arbiter 1005 to pass control of the address and data buses, and gains control of the buses upon reception of the acknowledge signal BUSAK, thus performing DMA transfer, in the same manner as described above. That is, the DMAC 1006 supplies an acknowledge signal ACK2 to the MIDI I/O 1010 to transfer the MIDI data between the MIDI I/O 1010 and the MIDI buffer in the buffer section 1007. In addition, the DMAC 1006 outputs a predetermined read/write control signal R/W.

The image I/O 1011 is designed to exchange video signals with external devices and incorporates a frame buffer (e.g., an RGB data frame buffer) corresponding to one frame. In the reproduction mode, this frame buffer is updated in accordance with the contents of the image buffer in the buffer section 1007 at several periods per second. In the record mode, a digitizer incorporated in the image I/O 1011 digitizes input image signals periodically (several times per second), thus updating the frame buffer. In the record mode, data is sequentially transferred from the frame buffer to the image buffer in the buffer section 1007.

The image I/O 1011 generates and supplies a DMA transfer request signal REQ3 to the DMAC 1006 several times per second (strictly speaking, several sets of request signals) every time sampling is performed.

In response to the request signal REQ3, the channel CH3 of the DMAC 1006 requests (outputs the signal BUSRQ) the bus arbiter 1005 to pass control of the address and data buses, and gains control of the buses upon reception of the acknowledge signal BUSAK, thus performing DMA transfer, in the same manner as described above. That is, the DMAC 1006 supplies an acknowledge signal ACK3 to the image I/O 1011 to perform transfer of image data between the image I/O 1011 and the image buffer in the buffer section 1007. In addition, the DMAC 1006 outputs a predetermined read/write control signal R/W.

The HDC 1008 requests (outputs a request signal REQ4) the DMAC 1006 to perform data transfer between the hard disk 1012 and a desired area of the buffer section 1007 in accordance with programming of the CPU 1001. In response to the request signal REQ4, the channel CH4 of the DMAC 1006 requests (outputs the signal BUSRQ) the bus arbiter 1005 to pass control of the address and data buses, and gains control of the buses upon reception of the acknowledge signal BUSAK, thus performing DMA transfer, in the same manner as described above. That is, the DMAC 1006 supplies an acknowledge signal ACK4 to the HDC 1008 to perform data transfer between the hard disk 1012 and a designed buffer in the buffer section 1007. In addition, the DMAC 1006 outputs a predetermined read/write control signal R/W.

A plurality of request signals REQ may be simultaneously supplied to the DMAC 1006. In this case, the DMAC 1006 executes DMA transfer control in accordance with the following priority order: REQ1 > REQ2 > REQ3 > REQ4. This priority order is based on the degree of emergency of the execution of DMA transfer.

More specifically, if data transfer of an audio signal is not properly performed at each sampling timing, the reproduced sound becomes very unnatural. In contrast to this, the data transfer timing of the MIDI signal is not so severe as that of an audio signal. Therefore, the priority of data transfer of the MIDI signal is lower than that of an audio signal. Similarly, since management of switching of frames need not be as severe as that of the change timing of sounds and automatic performances, data transfer of a video signal is lower in priority than the signals described above. The channel CH4 is designed to perform data transfer between the hard disk 1012 and the buffer section 1007. Since a large time margin is set in the buffer section 1007, even if data transfer between the hard disk 1012 and the buffer section 1007 is interrupted by another DMA transfer request, and the interruption is executed first, no problems are posed.

### <Storage contents of hard disk 1012>

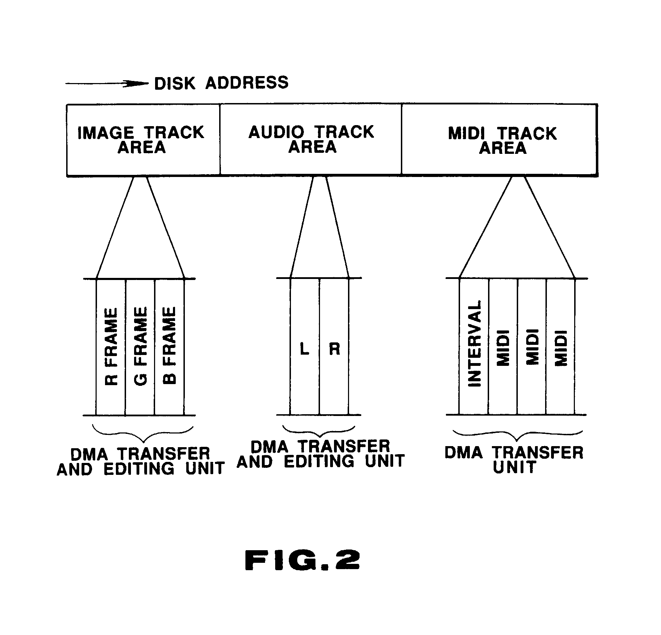

Fig. 2 shows a data format of the hard disk 1012, which is roughly divided into three areas. The three areas are: an audio track area for exchanging data with the audio buffer in the buffer section 1007; a MIDI track area for exchanging data with the MIDI buffer in the buffer section 1007; and an image track area for exchanging data with the image buffer in the buffer section 1007.

As audio data, left (L) and right (R) data are alternately stored in one track. This pair of data serve as a basic unit for DMA transfer and editing processing to be described later. Assume that one sampled data is expressed by 16 bits, and the sampling frequency is 48 kHz.

The unit of the MIDI data is constituted by interval data for the above-described timing control and the MIDI data (MIDI message) having 0 byte or more. Note that this byte length is arbitrary and is changed in accordance with the arrangement of the MIDI data for each operation. Note that when the MIDI data is 0 byte, it simply represents a time interval. This variable-length data is the basic unit of DMA transfer.

When a color image is to be displayed, a set of R, G, and B image data, as video data, constitutes one frame. Each frame is constituted by N dots × M dots (e.g., 640 dots × 400 dots). Several frames can be changed per second. This set of R, G, and B image data constitutes a base unit for DMA transfer and editing processing.

Note that data transfer between the hard disk 1012 and the buffer section 1007 need not always be performed in the above-described unit as long as the data storage/reproduction order of the hard disk 1012 corresponds to that of the buffer section 1007. It is, however, important that the units of data transfer between the buffer section 1007 and the respective I/O interfaces 1009 to 1011 be controlled in the above-described manner.

### <Audio input/output operation>

Of the operations of this embodiment, operations associated with the relationship between the audio I/O 1009 and the buffer section 1007 or the hard disk 1012 will be described below.

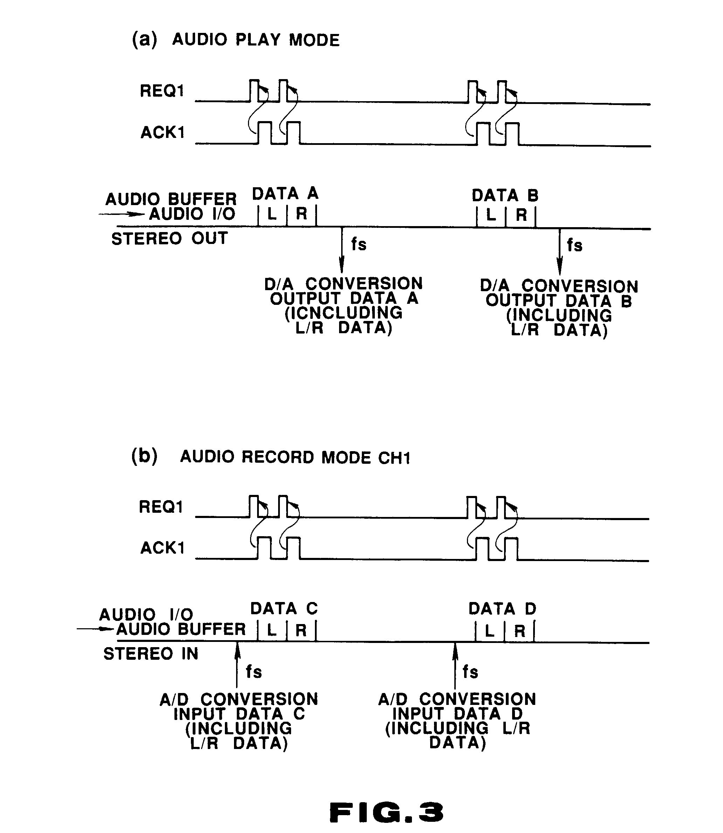

Figs. 3(a) and 3(b) are timing charts of the operations. Fig. 3(a) shows an operation in the play mode. Fig. 3(b) shows an operation in the record mode.

In the play mode, data is sequentially transferred from the hard disk 1012 to the audio buffer (part of the buffer section 1007) as a ring buffer, thus performing a pre-load operation. In order to read out audio data from the audio buffer, the audio I/O 1009 outputs the DMA transfer request REQ1 to the DMAC 1006 at every sampling timing (strictly speaking, before every sampling period (fs), as shown in Fig. 3(a)). When DMA transfer can be performed, the acknowledge signal ACK1 is supplied from the channel CH1 of the DMAC 1006, and data transfer is actually performed from the buffer section 1007 to the audio I/O 1009.

At this time, since the audio data is stereophonic data, as described above, the request signal is supplied from the audio I/O 1009 to the DMAC 1006 twice to perform data transfer twice, thus transferring the left (L) and right (R) data to be used for one sampling operation.

The audio data, i.e., the left (L) and right (R) data, stored in the internal buffer of the audio I/O 1009 are simultaneously digital/analog-converted in synchronism with a sampling clock (fs) to be stereophonically output.

The audio data pre-loaded from the hard disk 1012 and stored in the audio buffer are sequentially read out and converted into analog signals at every sampling period to be output. As will be described later, with the function of the channel CH4 of the DMAC 1006, before all the data are read out to empty the audio buffer, the next audio data block is transferred from the hard disk 1012. Therefore, even if the access speed of the hard disk 1012 is not so high, a sound reproducing operation during a sampling period can be performed at high speed.

In the record mode, an externally supplied analog stereophonic signal is converted into a digital signal in synchronism with the sampling clock (fs) and stored in the internal buffer of the audio I/O 1009. Since the digital signal is constituted by left (L) and right (R) data, the DMA transfer request REQ1 is supplied to the DMAC 1006 twice to DAM-transfer the data from the audio I/O 1009 to the audio buffer in the buffer section 1007 in response to the acknowledge signal ACK1.

In this manner, audio data is stored in the audio buffer in the buffer section 1007 at every sampling timing. However, with the function of the channel CH4 of the DMAC 1006, before the audio buffer is filled with data, the audio data stored in the buffer section 1007 in advance is transferred to the hard disk 1012 in blocks. Therefore, similar to the play mode, in the record mode, even if the access speed of the hard disk 1012 is not so high, an audio signal recording operation in a sampling period can be performed at high speed.

### <MIDI input/output operation>

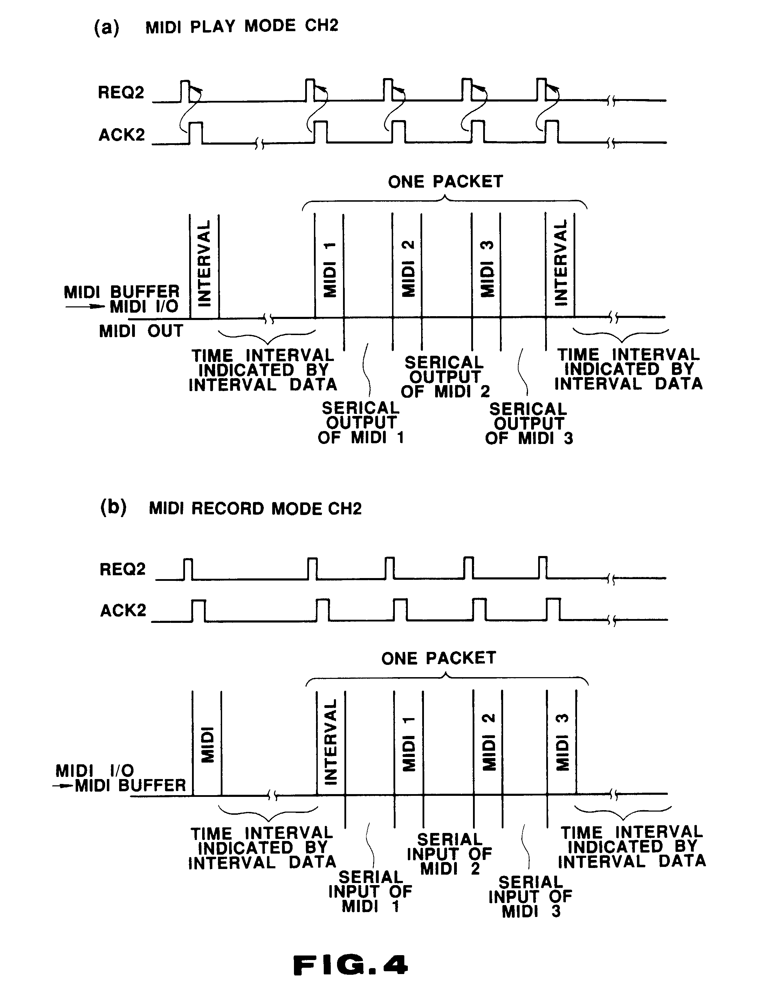

Figs. 4(a) and 4(b) show automatic performance control operations based on the MIDI data. Figs. 4(a) and 4(b) respectively show operations in the play mode and the record mode.

In the play mode, the MIDI data corresponding to a plurality of operations is transferred beforehand from the MIDI track area of the hard disk 1012 to the MIDI buffer in the buffer section 1007. This data transfer is performed by the channel CH4 of the DMAC 1006.

The MIDI I/O 1010 requests (outputs the request signal REQ2) the DMAC 1006 to transfer the interval data of the MIDI data associated with one packet. In response to the acknowledge signal ACK2, the data is supplied from the MIDI buffer in the buffer section 1007 to the MIDI I/O 1010, and measurement of the corresponding time interval is started in the above-described internal timer.

If the lapse of the time interval is determined in the MIDI I/O 1010, the MIDI I/O sends the DMA transfer request REQ2 to the DMAC 1006 again. When the MIDI message is transferred from the MIDI buffer in the buffer section 1007, the MIDI I/O 1010 performs parallel/serial conversion and outputs the resultant serial MIDI signal to an external MIDI device. This operation is repeatedly performed a number of times corresponding to the number of the bytes of the message included in one packet. Upon completion of this processing, DMA transfer of the next interval data is requested.

In this manner, the MIDI data is sequentially reproduced every time the time designated by the interval data elapses. Subsequently, the contents of the MIDI buffer are sequentially used. However, before the MIDI buffer becomes empty, the next MIDI data is transferred from the hard disk 1012 in blocks by the channel CH4 of the DMAC 1006.

In the record mode, the MIDI data is externally supplied in the serial form. Upon reception of the new MIDI data, the MIDI I/O 1010 sends the transfer request signal REQ2 to the DMAC 1006 to transfer an output from the timer, which has measured the lapse of time after the previous MIDI data was input, as interval data, to the MIDI buffer. In response to the acknowledge signal ACK2, data transfer from the MIDI I/O 1010 to the MIDI buffer is executed.

In the MIDI I/O 1010, the input MIDI data is converted into a parallel signal by the internal serial/parallel converter. Thereafter, DMA transfer is executed between the MIDI I/O 1010 and the buffer section 1007. Such an operation is repeatedly executed a number of times corresponding to the number of bytes associated with the MIDI input.

As such data transfer is repeated, the MIDI data are accumulated in the MIDI buffer in the buffer section 1007. However, before the MIDI buffer is filled with the data, the MIDI data is transferred from the MIDI buffer to the MIDI track area of the hard disk 1012 in blocks by the channel CH4 of the DMAC 1006.

With the above-described operation, even if the access speed of the hard disk 1012 is not much high, real-time recording/reproduction of the MIDI data can be performed by the function of the buffer section 1007.

### <Video data input/output operation>

Of the operations of this embodiment, the relationship between the image I/O 1011 and the image buffer in the buffer section 1007, and the relationship between the image I/O 1011 and the hard disk 1012 will be described below.

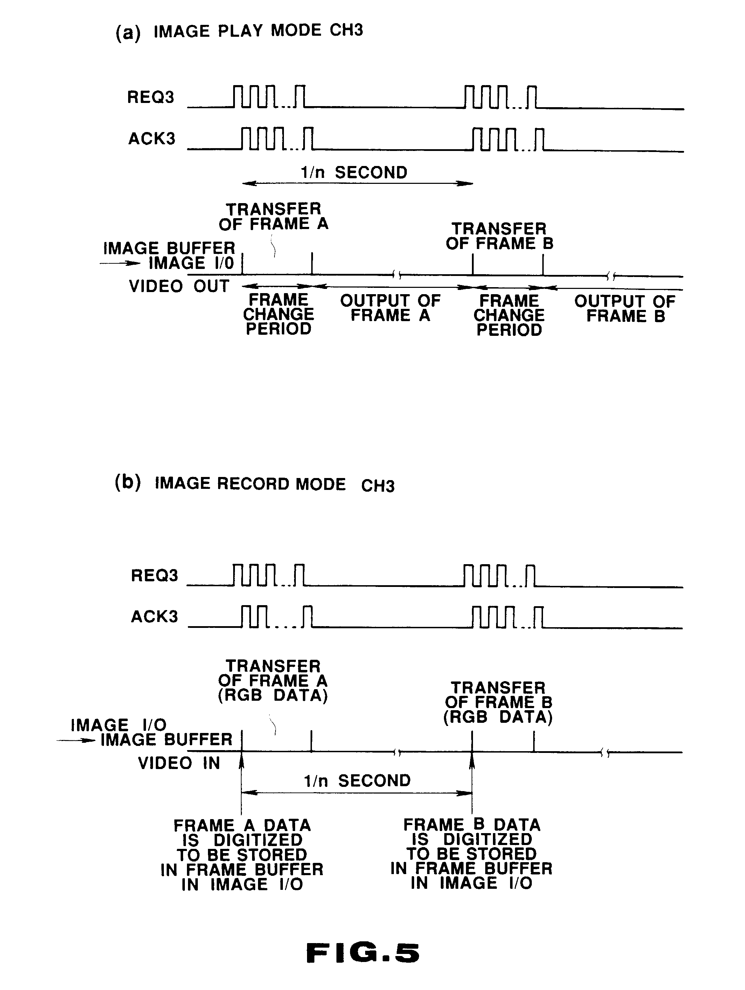

Figs. 5(a) and 5(b) are timing charts in such image recording/reproduction processing. Figs. 5(a) and 5(b) respectively show operations in the play mode and the record mode.

In the play mode, image data is transferred beforehand from the image track area of the hard disk 1012 to the image buffer in the buffer section 1007 to be stored therein. This operation is performed by the channel CH4 of the DMAC 1006, as described above.

At a frame switching timing (if n frames of images are displayed per second (motion-picture display), the switching timing comes every 1/n seconds), the image I/O 1011 supplies the data transfer request signal REQ3 to the DMAC 1006. As described above, one frame is constituted by a data set of a plurality of R, G, and B dots, and data transfer corresponding to one frame is completed by a plurality of data transfer operations. Therefore, as shown in Fig. 5 the data transfer request signal REQ3 is supplied from the image I/O 1011 to the DMAC 1006 a number of times corresponding to the amount of data, and transfer of image data from the image buffer in the buffer section 1007 to the frame buffer of the image I/O 1011 is executed by the channel CH3 of the DMAC 1006 every time the acknowledge signal ACK3 is supplied from the DMAC 1006. When the image data is written in the frame buffer of the image I/O 1011, a new frame is displayed. Such an operation is performed every 1/n seconds to continuously change frames, thus performing motion-picture display.

In this manner, the image data sequentially preloaded from the image track area of the hard disk 1012 and input to the image buffer in the buffer section 1007 is input/stored to/in the frame buffer of the image I/O 1011 at every predetermined timing and is output as video signals.

In the record mode, video signals transferred every 1/n seconds are digitized and input to the frame buffer in the image I/O 1011. In order to perform DMA transfer of the digitized signals to the video buffer in the buffer section 1007, the request signal REQ3 is output a number of times corresponding to the data transfer amount, and the channel CH3 of the DMAC 1006 repeatedly executes data transfer in response to the acknowledge signal ACK3. Subsequently, the channel CH4 of the DMAC 1006 transfers the frame data, transferred to the buffer section 1007 every 1/n seconds in this manner, from the frame buffer to the image track area of the hard disk 1007 to store them therein.

By repeating such an operation, video signals (motion picture) supplied from an external video device are sequentially digitized and transferred/recorded to/on the hard disk 1012 through the buffer section 1007.

### <Operation of channel CH4 of DMAC 1006>

An operation of the channel CH4 of the DMAC 1006 will be described next. As described above, with the functions of the channels CH1 to CH3 of the DMAC 1006, data transfer (DMA transfer) between the audio I/O 1009 and the audio buffer in the buffer section 1007, data transfer (DMA transfer) between the MIDI I/O 1010 and the MIDI buffer in the buffer section 1007, and data transfer (DMA transfer) between the image I/O 1011 and the image buffer in the buffer section 1007 are selectively executed (since a track (an audio track, a MIDI track, or a video track) to be operated is designated by a user, it is apparent that all the tracks need not be set in the play or record mode). As a result of such data transfer, data pre-loaded in the buffer section 1007 is sequentially consumed in the play mode, and data is sequentially stored in the buffer section 1007 in the record mode. The channel CH4 of the DMAC 1006 serves to transfer new data subsequent to the previously transferred data from the hard disk 1012 to the buffer section 1007 or to transfer new data subsequent to the previously transferred data from the buffer section 1007 to the hard disk 1012.

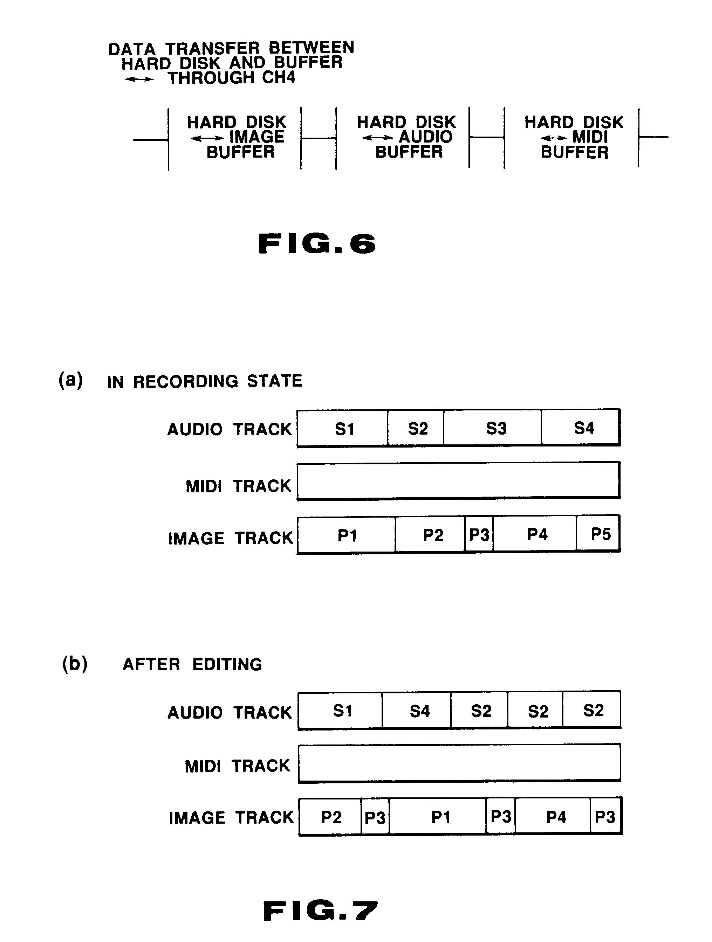

Fig. 6 is a timing chart showing such an operation state. When transfer of a data block corresponding to one track is completed under the control of the CPU 1001, selection and programming of the transfer area of the next data block and its direction (from the hard disk 1012 to the buffer section 1007 or from the buffer section 1007 to the hard disk 1012) are performed with respect to the DMAC 1006 and the HDC 1008. The channel CH4 of the DMAC 1006 performs data transfer associated with the designated area of the designated track in response to the transfer request signal REQ4 from the HDC 1008.

In the case shown in Fig. 6, data transfer between the hard disk 1012 and the buffer section 1007 is performed in the following order: between the hard disk 1012 and the image buffer; between the hard disk 1012 and the audio buffer; and between the hard disk 1012 and the MIDI buffer. However, after data transfer corresponding one block is completed, a specific track to be subjected to DMA transfer processing by the channel CH4 of the DMAC 1006 is determined depending on the state of each buffer at that time. More specifically, in the play mode, determination is performed depending on whether sufficient data is pre-loaded in each buffer. In the record mode, it is determined whether each buffer has a sufficient free area, and DMA transfer is performed first with respect to a buffer in which preloaded data is decreased in amount or to a buffer in which the free area is reduced.

### <Editing operation>

Figs. 7(a) and 7(b) show an example of an editing operation by this embodiment. In the hard disk 1012, data is stored in units of tracks. Each data is divided into data components as events having desired lengths. This operation is executed by the CPU 1001 in accordance with an operation of the keyboard 1003 or the like by a user. As a result, for example, the data in the audio track is divided into events S1 to S4, while the data in the image tack is divided into events P1 to P5.

Data designating the address ranges of the respective events in the hard disk 1012 is recorded in specific areas in the ROM/RAM 1002 by the function of the CPU 1001. In this manner, an event table is completed.

Since the hard disk 1012 is capable of random access, the above-mentioned events can be read out in any order. For example, as shown in Fig. 7(b), the data in the audio track can be reproduced in the order of S1, S4, S2, S2, and S2, and the data in the image track can be reproduced in the order of P2, P3, P1, P3, and P4, and P3, accordingly, without actually rewriting the stored data of the hard disk 1012. Reproduction in such orders can be realized by supplying commands to the CPU 1001 upon operation of the keyboard 1003 or the like and forming a track schedule table using specific areas of the ROM/RAM 1002.

Assume that such a track schedule table is completed. In this case, when these tracks are set in the play mode, the CPU 1001 always monitors the track schedule table to control the contents of data transferred from the hard disk 1012 to the buffer section 1007, thus performing data transfer with respect to areas corresponding to the orders designated by the track schedule table.

Note that an editing operation can be performed with respect to the MIDI track, similar to other tracks. In this case, however, the interval data must be updated upon editing processing, and hence the stored data of the hard disk 1012 is actually updated.

### <Modification>

The first embodiment of the present invention has been described in detail. The present invention is not limited to this.

More specifically, in the above-described embodiment, three types of data, i.e., audio, MIDI, and image data, are integrated to be recorded/reproduced. However, of these data, at least two arbitrary types of data may be integrated to be recorded/reproduced. Alternatively, other types of data, e.g., sequence data for determining a sequence of functions and operations, may be integrated with the three types of data to be recorded/reproduced.

In addition, in the above embodiment, image data are continuously recorded/reproduced to realize motion-picture display. However, if still-image display is to be performed, a combination of image data associated with each still image and interval data (representing the time interval between change timings of image data and formed in the timer in the image I/O 1011) is recorded, and in the reproduction mode, the reproduction timing of each image data is determined while the lapse of time corresponding to each interval data is measured by the timer. This technique is the same as the above-described technique of reproducing the MIDI data.

Furthermore, if image data is compressed/expanded by using a data compression/expansion technique so as to be recorded/reproduced on/from the hard disk 1012, image data of a larger number of frames can be recorded/reproduced.

According to the arrangement described above, a multimedia recorder having a relatively simple arrangement can be provided, and a plurality of types of data (multimedia) can be integrally recorded/reproduced. In addition, editing processing can be efficiently performed.

### Second Embodiment

### <General structure>

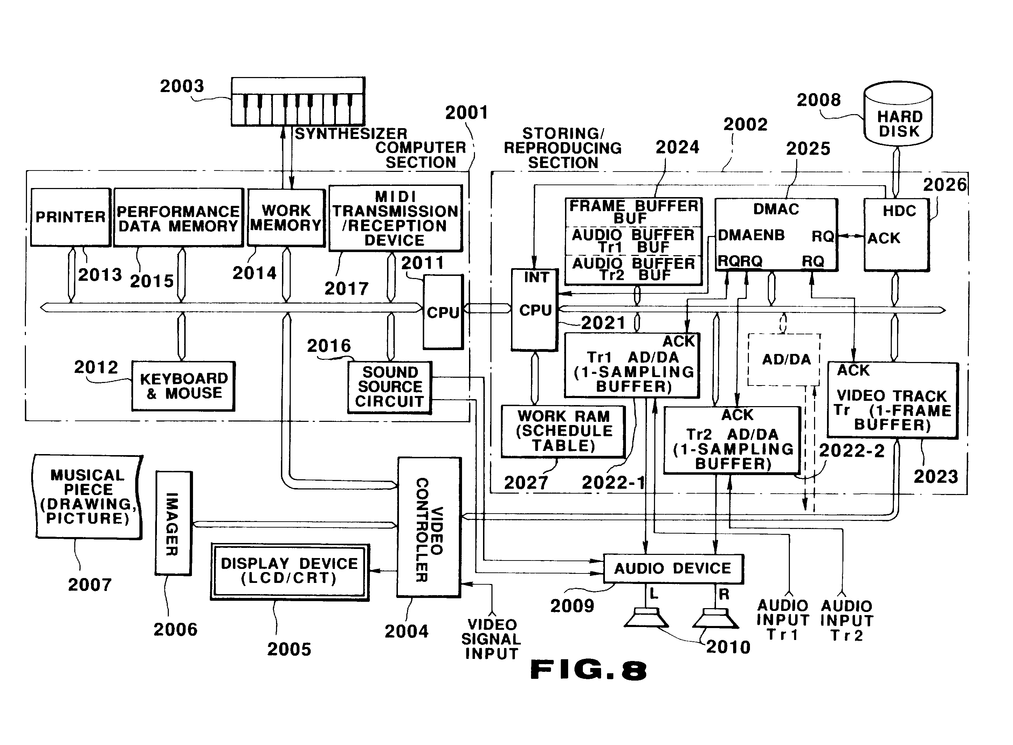

Fig. 8 is a circuit diagram showing the general structure of an automatic performance apparatus according to the present invention, which includes a computer section 2001 and a storing/reproducing section 2002. In addition to a CPU 2011 as a main component constituted by a microcomputer or the like, the computer section 2001 includes a keyboard and mouse 2012 as an input device, a printer 2013 as an output device, and a work memory 2014 for storing data. The computer section 2001 further includes the following components for automatic musical performances: a performance data memory 2015, a sound source circuit 2016, and a MIDI (Musical Instrument Digital Interface) transmission/reception device 2017. These components are connected to the CPU 2011 and perform various operations under the control of the CPU 2011.

The MIDI transmission/reception device 2017 can be connected to an external synthesizer 2003 so that input performance data (supplied as the MIDI message) from the external synthesizer 2003 can be received and stored, as data (e.g., pitch and note length data), in the performance data memory 2015. In addition, the computer section 2001 can transmit performance data to the external synthesizer 2003 through the MIDI transmission/reception device 2017 to cause the synthesizer 2003 to automatically play a music. The performance data memory 2015 not only can store input performance data (real-time input) from the synthesizer 2003 as automatic performance data, but also can sequentially receive note data (step input) as automatic performance data through the keyboard and mouse 2012.

The CPU 2011 can automatically generate musical score data from automatic performance data input in this manner. Video data from the CPU 2011 is displayed on a display device 2005 through a video controller 2004. In addition to frame data preset in the computer section 2001, various types of data input through the keyboard and mouse 2012 are displayed on the display device 2005. The display device 2005 is constituted by a liquid crystal display (LCD) or a CRT and is preferably capable of color display.

An imager 2006 is connected to the video controller 2004 so that image data of a musical score, painting, or photograph 2007 can be input. In addition, video signals from a VTR, a video camera, and the like can be input to the video controller 4. The video controller 2004 can display these video signals on the display device 2005 and can convert them into digital signals to send them to the storing/reproducing section 2002. In contrast to this, digital video signals from the storing/reproducing section 2002 are supplied to the video controller 2004 to be displayed on the display device 2005. Note that a circuit for compressing/expanding (restoring) image data may be arranged in the video controller 2004 to decrease the number of bits of image data to be supplied to the storing/reproducing section 2002.

The storing/reproducing section 2002 performs storage/reproduction control with respect to a hard disk 2008 (can be replaced with a random access type large-capacity memory capable of read/write processing, e.g., an optomagnetic disk) as an external memory device. In addition to a CPU 2021 as a main component, the storing/reproducing section 2002 includes audio input/output devices 2022-1 and 2022-2, a video input/output device 2023, a three-track buffer section 2024, a DMA (Direct Memory Access) controller (DMAC) 2025, a hard disk controller (HDC) 2026, and a work RAM 2027.

More specifically, the CPU 2021 is connected to the CPU 2011 in the computer section 2001 and controls the operations of the respective circuits in the storing/reproducing section 2002 under the control of the CPU 2011. The audio input/output devices 2022-1 and 2022-2 are in charge of audio tracks 1 and 2 (Tr1 and Tr2), respectively. In this embodiment, a two-track audio input/output operation can be performed. However, as indicated by broken lines in Fig. 8, an audio input/output device corresponding to another track can be additionally arranged.

Each of the audio input/output devices 2022-1 and 2022-2 incorporates an A/D converter for converting an externally supplied analog audio signal into a digital audio signal at a sampling timing, a D/A converter for converting a digital audio signal into an analog audio signal and outputting it to an external device at a sampling timing, and a one-sampling buffer for storing audio data corresponding to one sampling operation. The video input/output device 2023 is in charge of a video track and incorporates a one-frame buffer for storing a one-frame digital video signal in synchronism with a frame change timing. In a video reproducing operation, the display contents of the display device 2005 are changed as a result of updating of the data in the one-frame buffer. In a video input operation, the video input/output device 2023 receives frame data from the video controller 2004 in units of frames.

The audio input/output device 2022-1 in charge of the audio track Tr1 exchanges data (signal transmission) with an audio voice buffer Tr1BUF in the buffer section 2024 at every sampling timing. The audio input/output device 2022-2 in charge of the audio track Tr2 exchanges data (signal transmission) with an autio buffer Tr2BUF in the buffer section 2024 at every sampling timing. In addition, the video input/output device 2023 in charge of the video track exchanges data (one-frame data) with a frame buffer BUF in the buffer section 2024 at every frame change timing.

The audio input/output devices 2022-1 and 2022-2 and the video input/output device 2023 output DMA transfer request signals RQ to the DMAC 2025 at the respective data transfer timings. When data transfer operations are to be actually performed, the DMAC 2025 sends acknowledge signals ACK to the respective devices, thus performing DMA control.

The audio buffers Tr1BUF and Tr2BUF have areas for storing digital audio data corresponding to a plurality of data transfer operations and serve as ring buffers. In the record mode, audiuo data is transferred from the audio buffers Tr1BUF and Tr2BUF to corresponding areas of the hard disk 2008 in blocks. In the play mode, audio data is transferred from corresponding areas of the hard disk 2008 to the auduio buffers Tr1BUF and Tr2BUF in blocks.

The frame buffer BUF in the buffer section 2024 has an area for storing at least one-frame video data. In the record mode, one-frame data is transferred from the frame buffer BUF to the a corresponding area of the hard disk 2008. In the reproduction or play mode, one-frame data is transferred from a corresponding area of the hard disk 2008 to the frame buffer BUF.

The HDC 2026 outputs the DMA transfer request signal RQ to the DMAC 2025, and the DMAC 2025 sends the acknowledge signal ACK to the HDC 2026, thus performing actual DMA transfer between the buffer section 2024 and the hard disk 2008. The DMAC 2025 and the HDC 2026 perform control operations to sequentially execute data transfer between the hard disk 2025 and the three areas in the buffer section 2024 in a time-divisional manner in accordance with the programming of the CPU 2021. The HDC 2026 supplies an interrupt signal INT to the CPU 2021 every time transfer of one-block data is completed. During the execution of DMA transfer (while a signal DMAENB is active), control of the data and address buses of the storing/reproducing section is possessed by the DMAC 2025. Otherwise (while the signal DMAENB is inactive), the CPU 2021 performs setting and programming of the respective internal circuits.

The work RAM 2027 is designed to store a schedule table and disk access pointers for accessing the hard disk 2008. As will be described later, the hard disk 2008 serves to store not only performance data (note data) of a plurality of music pieces but also audio data (vocal part data, background music data, and the like) to be reproduced in accordance with the performance data, and video data (music score data, character data, scenery data, and the like) as integral data, thus requiring a schedule table and the like for managing read operations of these data.

In the play mode, analog audio signals output from the audio input/output devices 2022-1 and 2022-2 are supplied to an audio device 2009 together with musical tone signals from the sound source circuit 2016 in the computer section 2001 described above and are output, as L/R stereophonic outputs, from speakers 2010.

### <Arrangement of DMAC 2025>

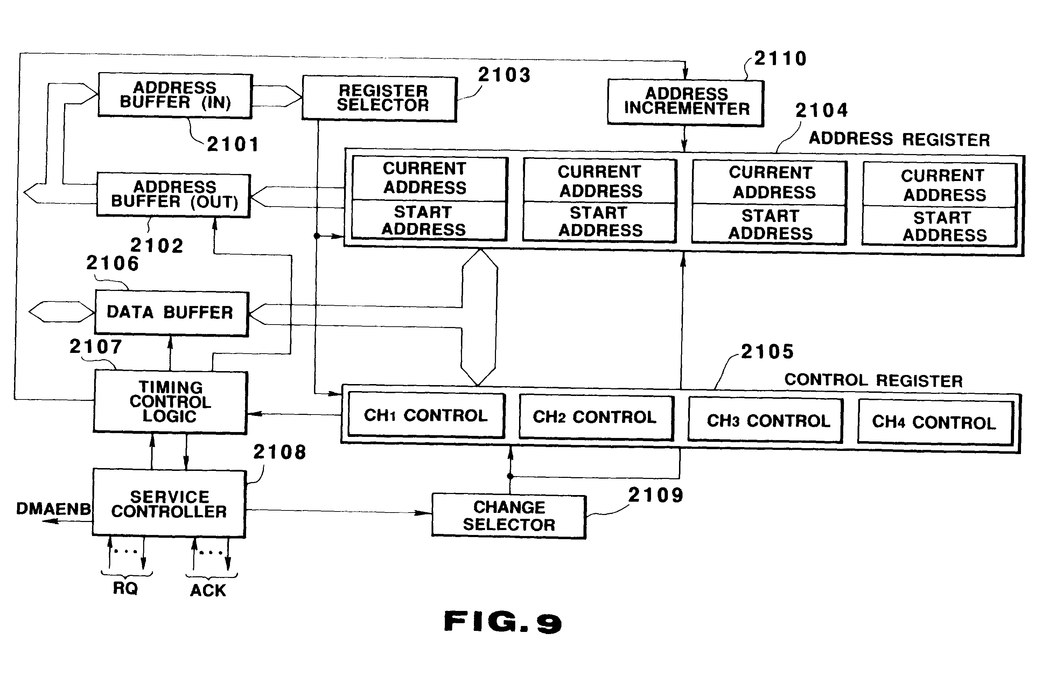

An arrangement of the DMAC 2025 will be described below. As shown in Fig. 9, the DMAC 2025 has four channels. DMA channels CH1 and CH2 correspond to audio tracks 1 and 2, respectively, and serve to perform data transfer between the audio input/output devices 2022-1 and 2022-2 and the buffers Tr1BUF and Tr2BUF in the buffer section 2024. A DMA channel CH3 corresponds to a video track and serves to perform data transfer between the video input/output device 2023 and the frame buffer BUF in the buffer section 2024. A DMA channel CH4 serves to perform data transfer between the hard disk 2008 and a designated one of the buffers in the buffer section 2024.

The DMAC 2025 has input-side (IN) and output-side (OUT) address buffers 2101 and 2102 connected to the address bus. The designation contents of a register selector 2103 are changed by an address signal supplied to the address buffer 2101 to designate desired registers of the registers existing in an address register section 2104 and a control register section 2105.

As described above, the address register section 2104 and the control register section 2105 respectively have registers corresponding to the four channels CH1 to CH4. The address register section 2104 has areas for storing at least current addresses and start addresses of the corresponding areas of the buffer section 2024. The control register section 2105 stores data, e.g., control data for designating the direction of DMA transfer.

The contents of the address register section 2104 and the control register section 2105 can be input/output with respect to the data bus through a data buffer 2106. These components are controlled by a timing control logic 2107, a service controller 2108, and a channel selector 2109.

The service controller 2108 is of a hard logic or microprogram control scheme. The service controller 2108 receives signals from the timing control logic 2107, the DMA transfer request signals RQ from the audio input/output devices 2022-1 and 2022-2, the video input/output device 2023, and the HDC 2026, and various control signals from the CPU 2021, and outputs the acknowledge signals ACK as responses to the respective components. In addition, the service controller 2108 outputs the signal DMAENB representing that DMA transfer is being performed, and outputs various control commands to the timing control logic 2107.

The channel selector 2109 selectively designates the registers, of the address register section 2104 and the control register section 2105, which correspond to the channels CH1 to CH4.

The timing control logic 2107 receives control signals from the service controller 2108 and performs input/output control of the address and data buffers 2102 and 2106. In addition, the timing control logic 2107 operates an address incrementer 2110 to increment a current address register, of the address register section 2104, which corresponds to a designated channel.

### <Operation of CPU 2011 in computer section 2001>

Operations of the computer section 2001, especially an operation of the CPU 2011, will be described next.

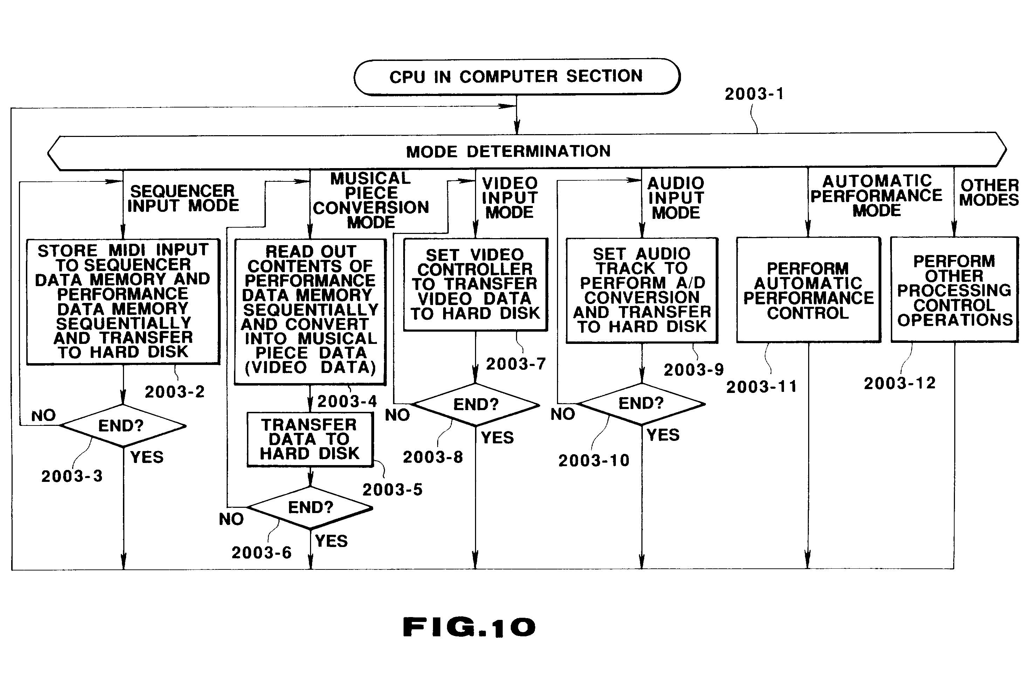

Fig. 10 is a flow chart showing the overall operations of the computer section 2001. In step 2003-1, an operation mode is determined. An operation mode is determined by a user using the keyboard and mouse 2012.

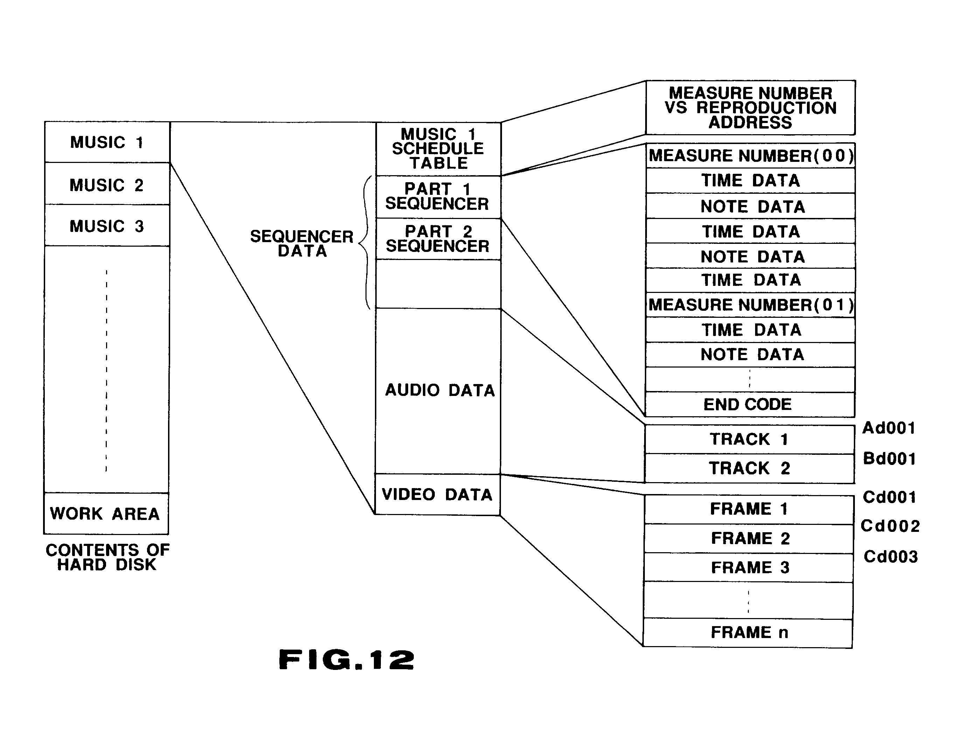

If, for example, the CPU 2011 determines the sequencer input mode, it receives the MIDI input from the external synthesizer 2003 and stores it, as sequencer data (automatic performance data), in the performance data memory 2015 (step 2003-3). Although any type of data format may be employed, one event (e.g., a note-ON/note-OFF operation) is expressed by a combination of time data representing the lapse of time from previous another event as shown in Fig. 12, and data (e.g., note data) representing the contents of the event. If measure number data is recorded as sequencer data in addition to this event data, automatic performance can be easily started from an arbitrary measure, and synchronization with reproduction of other data, i.e., audio data and video data, can be easily established. The position of a measure line can be detected from the time and tempo of the corresponding music by real-time processing or non-real-time processing (off-line processing).

Furthermore, in this sequencer input mode, the internal sound source circuit 2016 may be driven to generate a corresponding musical tone to be output through the audio device 2009. Sequence data may be input in units of a plurality of parts constituting a music. When the end of this series of input operations is detected (step 2003-3), the flow returns to step 2003-1 for mode determination. Note that, in addition to such a real-time input operation, sequencer data can be input step by step through the keyboard and mouse 2012 by, e.g., pasting each note on a music score displayed on the display device 2005, as described above. After desired sequencer data is stored in the performance data memory 2015, the data is transferred/stored to/in a designated area of the hard disk 2008 through the CPUs 2011 and 2021 and the HDC 2026 in accordance with an instruction from a user.

Note that such a sequencer input mode operation can be performed while audio data stored beforehand in the hard disk 2008 is reproduced. In this case, background music data from a CD or the like is stored beforehand in the hard disk 2008, and sequencer data can be stored by a real-time performance operation in synchronism with reproduction of the background music data.

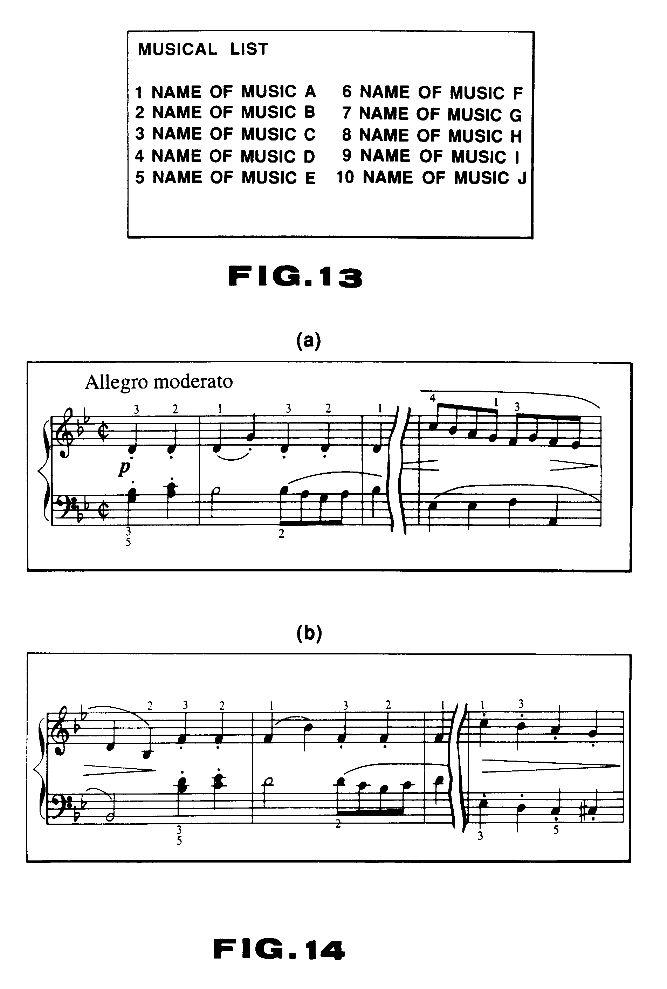

When the musical score conversion mode for automatically generating a corresponding musical score from the sequencer data input in this manner, the flow advances from step 2003-1 to step 2003-4 to generate musical score data from the sequencer data already stored in the performance data memory 2015. More specifically, the positions of the respective measure lines are detected from note string data and the time and tempo of the corresponding music, and the respective notes and rests (e.g., quarter-notes, eighth-notes, quarter-rests, and eighth-rest) are determined on the basis of note length data. These note (rest) string data and measure line data are converted into image data by using a character generator (not shown) and other note data/image conversion means in the video controller 2004. Frames are constituted by this image data in units of a fixed number of measures (e.g., four measures). Alternatively, an optimal number of measures in terms of the size of a frame may be set as one frame unit (variable units of number of measures). Referring to Fig. 14, (a) and (b) indicate an example of musical score display.

Note that in conversion of sequencer data into musical score data, the sequencer data may be supplied to the display device 2005 to be displayed so that the data can be edited by a user through the keyboard and mouse 2012 as needed, thereby reducing errors due to automatic (mechanical) conversion into musical score data.

In response to an instruction from the user, this image data is transferred from the video controller 2004 to the video input/output device 2023 of the storing/reproducing section 2002. The data is then stored in a designated area of the hard disk through the frame buffer BUF in the buffer section 2024 (step 2003-5). When this series of operations is repeated, and transfer of video data corresponding to a plurality of frames, as the musical score data, to the hard disk 2008 is completed (step 2003-6), the flow returns to step 2003-1 for mode determination.

According to the above description, musical score data is obtained by conversion from performance data. However, a direct image input operation can also be performed by using the imager 2006, or other video data can be input. That is, when the video input mode is designated by the user, the flow advances from step 2003-1 to step 2003-7.

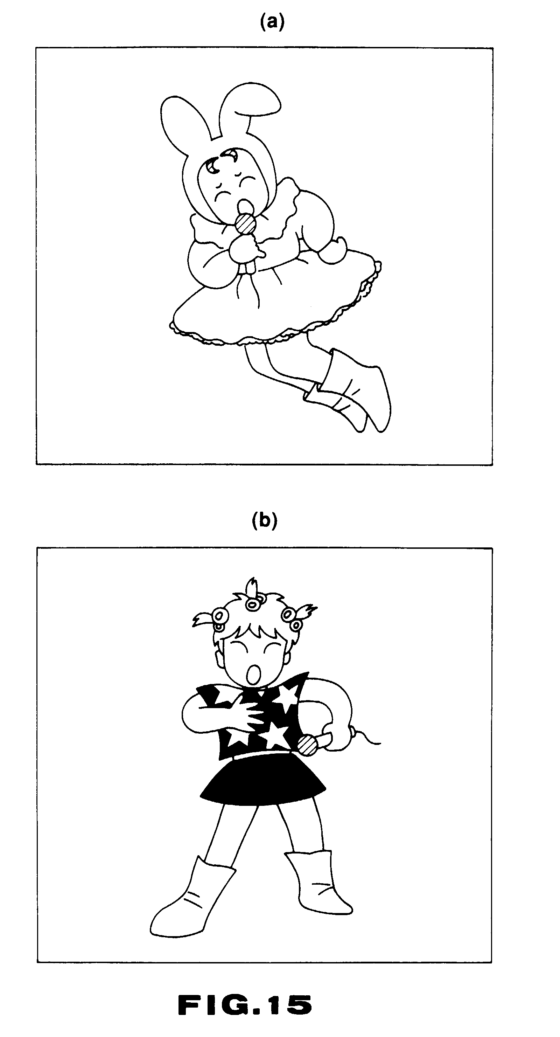

The CPU 2011 controls the operations of the internal circuits in accordance with video signals input to the video controller 2004. More specifically, when signals are input from the imager 2006, since an image has already been digitized, the digital image data is transferred to the video input/output device 2023 in units of frames and is stored in a designated area of the hard disk 2008 through the frame buffer BUF in the buffer section 2024. In contrast to this, when analog video signals are input from, e.g., a video camera, a VTR, or a still camera, the analog video signals are digitized in units of frames and are subjected to image compression processing as needed. Thereafter, the data is sequentially input/stored, as digital frame data of, e.g., N × M dots (one dot = n bits), in a predetermined area of the hard disk 2008 through the video input/output device 2023 and the frame buffer BUF in the buffer section 2024. Referring to Fig. 15, (a) and (b) indicate an example of character display based on image data input in this manner. In this case, if 10 frames or more are input per second, a motion-picture data input can be achieved, allowing reproduction of a motion picture. When the series of operations in the video input mode is completed (step 2003-8), the flow returns to step 2003-1 for mode determination.

When the audio input mode is determined, the flow advances from step 2003-1 to step 2003-9 to control the storing/reproducing section 2002 so as to supply analog audio signals, input from a microphone or an audio IN terminal, to the audio input/output devices 2022-1 and 2022-2. Note that if the audio input mode is set in combination with an automatic performance (to be described later), the user can input audio data in accordance with the automatic performance. In addition, in accordance with a performance of a music, part data as corresponding background music data can be input from a CD or the like.

More specifically, the A/D converters in the audio input/output devices 2022-1 and 2022-2 are operated to convert analog audio signals into digital signals at every sampling period. The digital signals are then transferred/stored to/in the hard disk 2008 through the audio buffers Tr1BUF and Tr2BUF in the buffer section 2024. In this case, different part data or L/R stereophonic signals may be input to the two tracks. In addition, one track may be set in the reproduction mode, while the other track is set in the record mode. When this series of operations is completed (step 2003-10), the flow returns to step 2003-1 for mode determination.

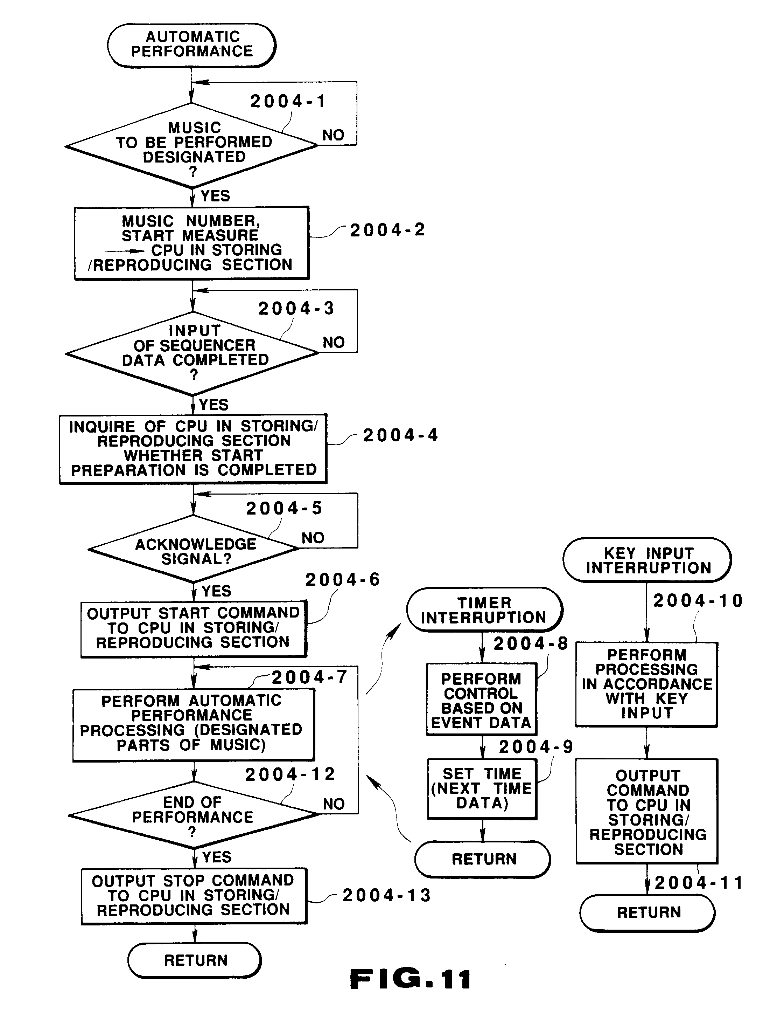

If the automatic performance mode is designated in step 2003-1 for mode determination, the flow advances to step 2003-11. Processing control in this mode is shown in detail in Fig. 11. If other modes are designated, the flow advances from step 2003-1 to step 2003-12 to perform predetermined processing and control.

### <Operation of CPU 2011 in computer section 2001: automatic performance mode>

In step 2004-1 in Fig. 11, the CPU 2011 checks whether a music to be automatically performed is designated. For example, performance data (sequencer data, PCM audio data, and frame data) of a plurality of music pieces is stored in the hard disk 2008 by operations to be described later, as shown in Fig. 12. The user is instructed to select one of the music pieces to be automatically performed. For example, in this selection, as shown in Fig. 13, the display device 2005 displays the names of the music pieces in character in units of ten music pieces, and the user selects one from the displayed names. If sequencer data is constituted by a plurality of part data, whether all or specific part data are subjected to automatic performance may be designated through a sub-frame. In addition, the user may be asked through a sub-frame whether to perform audio reproduction and video reproduction in accordance with this automatic performance.

When a music is designated in step 2004-1, the flow advances to step 2004-2, in which the CPU 2011 transfers the number of a music and start measure data to the CPU 2021 in the storing/reproducing section 2002. Although a reproducing operation is normally started from the first measure, an automatic performance can be started from an arbitrary measure of the music.

An operation of the CPU 2021 in the storing/reproducing section 2002 after the above-described operation will be described later. In accordance with the designated music and measure, the CPU 2021 reads out the sequencer data from the corresponding area of the hard disk 2008 and transfers it to the performance data memory 2015 through the CPU 2011. The CPU 2011 checks whether input of the sequencer data is completed. If it is completed, the flow advances to step 2004-4.

In step 2004-4, the CPU 2011 inquires of the CPU 2021 in the storing/reproducing section 2002 whether an automatic performance is ready to start. More specifically, audio data and video data can be reproduced together in accordance with an automatic performance of a music, and the CPU 2011 inquires whether preparations for reproduction of audio data and video data are completed in the storing/reproducing section 2002. If only an automatic performance simply using the sound source circuit 2016 is executed, the storing/ reproducing section 2002 is not operated in accordance with the automatic performance. In this case, therefore, this check need not be performed.

If it is determined in step 2004-5 that an acknowledge signal with respect to the inquiry is supplied from the CPU 2021, the flow advances to step 2004-6 to supply a start command to the CPU 2021 so as to synchronously operate the storing/reproducing section 2002. Subsequently, in step 2004-7, an automatic performance is performed in accordance with the performance data recorded on the performance data memory 2015.

More specifically, the event data of a designated part is processed by timer interruption (step 2004-8). This timer interruption is based on time data between events and is performed every time the time designated by the time data elapses. Thereafter, time data based on the time interval between step 2004-8 and the next event is set in the timer (2004-9), and the flow returns to the main routine. In addition, if input operations are performed through the keyboard and mouse 2012 during this automatic performance, key input interruption occurs. As a result, the CPU 2011 performs processing in accordance with the key input operations in step 2004-10. Furthermore, in step 2004-11, the CPU 2011 supplies control signals to the CPU 2021 to control the operation of the storing/reproducing section 2002. For example, a pause, fast-forward, or rewind operation of the automatic performance is designated by this key input interruption.

In step 2004-12, it is checked whether the automatic performance of the music is completed. If it is completed, the CPU 2011 supplies a stop command to the CPU 2021 in step 2004-13 to terminate the operation of the storing/reproducing section 2002. Subsequently, the CPU 2011 causes the flow to return to the main routine (Fig. 10).

### <Operation of CPU 2021 in storing/reproducing section 2002: AV input/output mode>

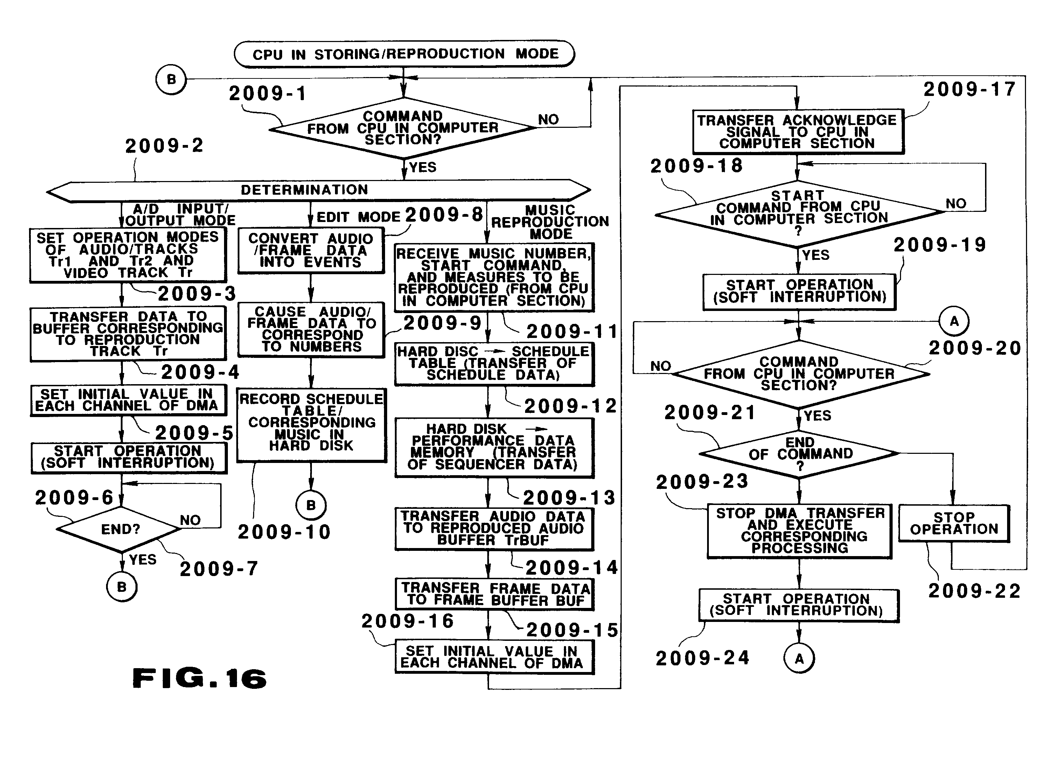

An operation of the CPU 2021 in the storing/reproducing section 2002 will be described below with reference to Fig. 16.

In step 2009-1, the CPU 2021 inquires whether a new command is given by the CPU 2011 in the computer section 2001. That is, the CPU 2021 is on the slave side with respect to the CPU 2011 and hence is operated in accordance with a command from the CPU 2011 on the master side. In step 2009-2, the CPU 2021 determines the contents of the command.

If the audio/video input/output mode (AV input/output mode) is determined, the flow advances to step 2009-3 to determine the operation mode of the audio input/output devices 2022-1 and 2022-2 (audio tracks Tr1 and Tr2) and the video input/output device 2023 (video track Tr). That is, the CPU 2021 sets the respective devices 2022-1, 2022-2, and 2023 in the record mode or the reproduction mode.

In step 2009-4, the CPU 2021 reads out the first block data from the hard disk 2008 and inputs it in an area, of the buffer section 2024, which corresponds to the track in the reproduction mode. In step 2009-5, the CPU 2021 sets initial values in the corresponding channels of the DMAC 2025.

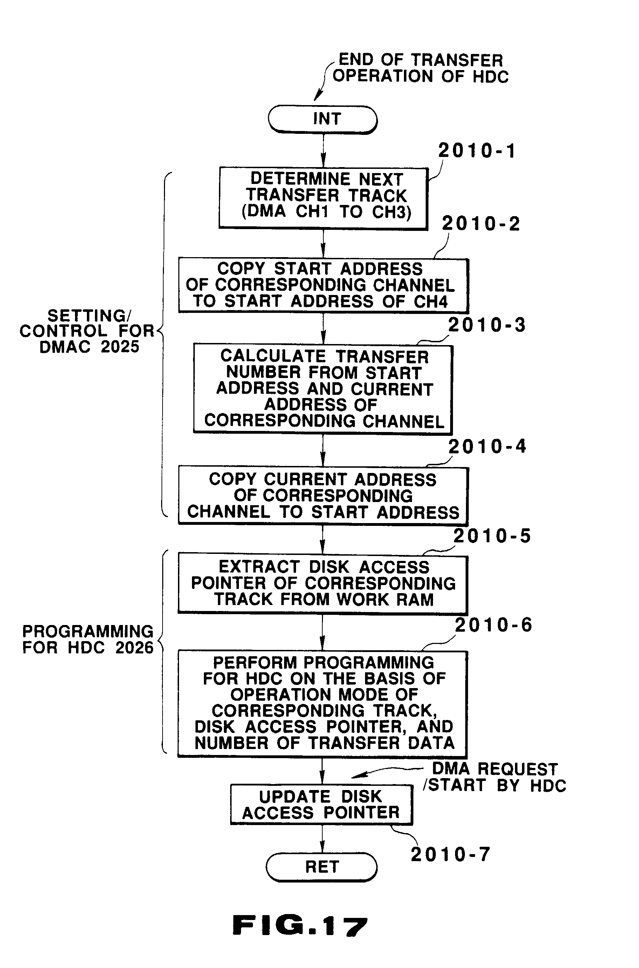

After such preparations are completed, an actual recording or reproducing operation is started in step 2009-6. That is, audio input/output operations of the audio input/output (A/D or D/A conversion) devices 2022-1 and 2022-2 and a digital video signal input/output operation of the video input/output device 2023 are selectively started. The CPU 2021 then performs soft interruption to start execution of the interrupt routine shown in Fig. 17 which is started in accordance with an interrupt signal supplied from the HDC 2026 upon completion of data transfer of one block.

Assume that all the tracks are set in the operation mode. In this case, since the priority order of CH1, CH2, CH3, and CH4 is given, the DMA channel CH1 corresponding to the audio track Tr1 is determined as a data transfer track in step 2010-1. If, for example, this track Tr1 is set in the reproduction mode, digital audio data is transferred in blocks from the hard disk 2008 to the audio buffer Tr1BUF of the buffer section 2024. In the track Tr1 is set in the recording mode, data is transferred in block from the audio buffer Tr1BUF of the buffer section 2024 to a corresponding area of the hard disk 2008.

That is, in step 2010-2, the start address of the channel CH1 of the DMAC 2025 is copied as the start address of the channel CH4. An operation of the DMAC 2025 at this time will be described later. Subsequently, the number of block transfer operations at this time is calculated from the start address of the channel CH1 and the current address (step 2010-3). In step 2010-4, the current address obtained as a result of completion of block transfer is set as the start address of the corresponding channel (CH1 at this time).

After the CPU 2021 performs each setting/control operation with respect to the DMAC 2025 in step 2010-1 and step 2010-4, the flow advances to step 2010-5 to extract the disk access pointer of the corresponding track of the hard disk 2008 from the work RAM 2027. In step 2010-6, the CPU 2021 performs programming of the HDC 2026 on the basis of the operation mode of the track Tr1 set in accordance with the contents of an area, of the control register section 2105 of the DMAC 2025, which corresponds to the channel CH1, the disk access pointer corresponding to the track Tr1, and the data transfer count determined in step 201-3. An operation of the HDC 2026 at this time will be described later.

Consequently, the HDC 2026 requests the DMAC 2025 to perform DMA transfer with respect to the track Tr1 in the designated direction. The DMAC 2025 executes the designated DMA transfer. This operation will be described later.

Subsequently, in step 2010-7, the CPU 2021 updates the disk access pointer, in the work RAM 2021, which corresponds to the track Tr1, to a value which the disk access pointer will take after the above-described transfer processing.

In this manner, all data transfer between the hard disk 2008 and the buffer section 2024 is executed by the DMAC 2025, and the CPU 2021 sets a value which the access pointer of the hard disk 2008 will take upon completion of this DMA transfer. The flow then returns to the main routine (Fig. 16).

As will be apparent from the later description, once the first interrupt routine (Fig. 17) is started and the HDC 2026 is operated, since the HDC 2026 generates interruption every time transfer of a data block designated by the CPU 2021 is completed, the CPU 2021 checks only whether the recording/reproducing operation is completed (whether a command is supplied from the CPU 2011) (step 2009-7 in Fig. 16). If it is determined in step 2009-7 in Fig. 16 that the AV input/output mode is completed, the flow returns to step 2009-1 as the initial state.

### <Operations of audio input/output devices 2022-1 and 2022-2>

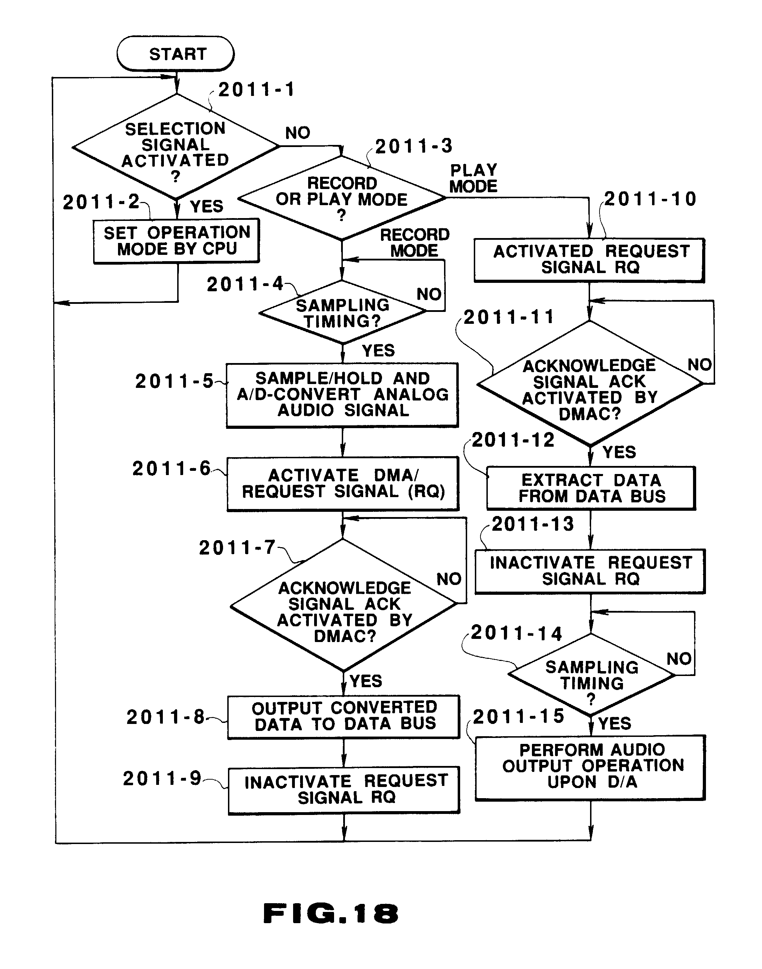

Operations of the audio input/output devices 2022-1 and 2022-2 will be described below with reference to Fig. 18. The function indicated by the flow chart in Fig. 18 may be realized by microprogram control or hard logic control. That is, a function realizing means can be variously selected. In step 2011-1, it is checked whether a designation signal supplied from the CPU 2021 to the audio input/output devices 2022-1 and 2022-2 is active. If YES in step 2011-1, an operation mode (e.g., the record, play, or stop mode) is set by the CPU 2021. This operation is performed in response to step 2009-3 in Fig. 16.

If NO in step 2011-1, it is checked in step 2011-3 whether the audio input/output devices 2022-1 and 2022-2 are in the record mode or the play mode. If it is determined that audio input/output devices 2022-1 and 2022-2 are set in the play mode, the flow advances from step 2011-3 to step 2011-4 and step 2011-9. If it is determined that they are set in the play mode, the flow advances to step 2011-10 and step 2011-15. Operations of the audio input/output devices 2022-1 and 2022-2 set in the record mode will be described first. In step 2011-4, it is checked whether a sampling timing has come. Step 2011-4 is repeated till the sampling timing. Note that in the determination of the sampling timing, hard timers may be respectively arranged in the audio input/output devices 2022-1 and 2022-2 so as to determine the sampling time on the basis of outputs from the timers, or a common hard timer may be arranged to operate the audio input/output devices 2022-1 and 2022-2 in accordance with an output from the timer. In addition, the audio input/output devices 2022-1 and 2022-2 may have different sampling frequencies.

If YES in step 2011-4, supplied analog signals are subjected to sample/hold (S/H) processing and A/D conversion. In step 2011-6, the DMA transfer request signal RQ is activated and output to the DMAC 2025.

Upon reception of the request signal RQ, the DMAC 2025 outputs the acknowledge signal ACK to perform DMA transfer (this operation will be described in detail later). If YES in step 2011-7, the flow advances to step 2011-8, in which the audio input/output devices 2022-1 and 2022-2 in the record mode output the digital audio data obtained by A/D conversion, and transfer the data to a corresponding buffer (Tr1BUF or Tr2BUF). In step 2011-9, the DMA transfer request signal RQ is inactivated. In this manner, externally supplied analog audio signals are converted into digital audio signals and are respectively transferred to the current addresses of designated buffers at every sampling period.

If the play mode is determined in step 2011-3, the flow advances to step 2011-10 to activate the DMA transfer request signal RQ to the DMAC 2025. When the acknowledge signal ACK is supplied from the DMAC 2025 (step 2011-11), the digital voice data on the data bus are fetched (step 2011-12), and the request signal RQ is inactivated (step 2011-13). An operation of the DMAC 2025 at this time will be described later. The contents of the corresponding current address (of the voice buffer Tr1BUF or Tr2BUF) of the buffer section 2024 are input/set in the voice input/output devices 2022-1 and 2022-2 with the above-described operation.

It is then checked whether a sampling timing has come (step 2011-14). This check is performed in the same manner as described with reference to step 2011-4. If YES in step 2011-14, the flow advances to step 2011-15, in which after D/A conversion and low-pass filtering are executed, and the resulting analog signals are output to an external device.

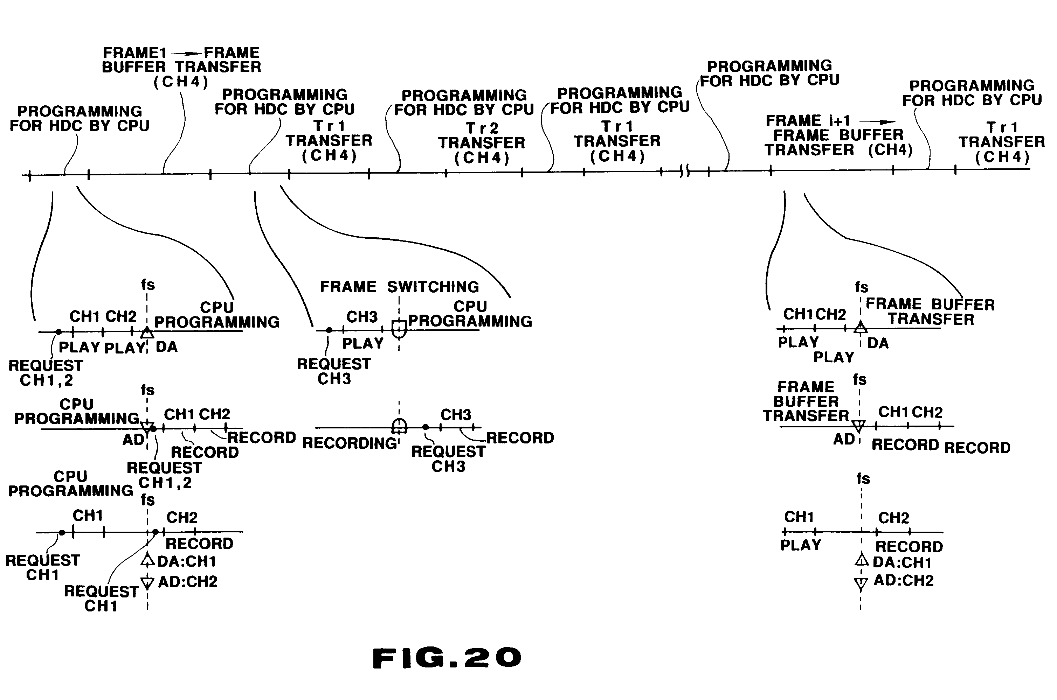

Operations at one sampling timing in the record mode and the play mode have been described above. After the processing in steps 2011-9 and 2011-15 is completed, the flow returns to step 2011-1. Subsequently, processing at the respective sampling timings is sequentially executed. This operation is shown in Fig. 20, which will be described in detail later. Reference symbol fs in Fig. 20 denotes a sampling period. In the record mode, A/D-converted audio data is fetched in synchronism with this sampling period. Contrary, in the play mode, audio data transferred before the sampling period is D/A-converted in synchronism with the sampling period. Fig. 20 shows cases wherein both the audio tracks Tr1 and Tr2 are set in the play mode and the record mode, and one of the tracks is set in the play mode, while the other track is set in the record mode. In each case, the priority order of CH1 and CH2 in DMA transfer is set.

### <Operation of video input/output device 2023>

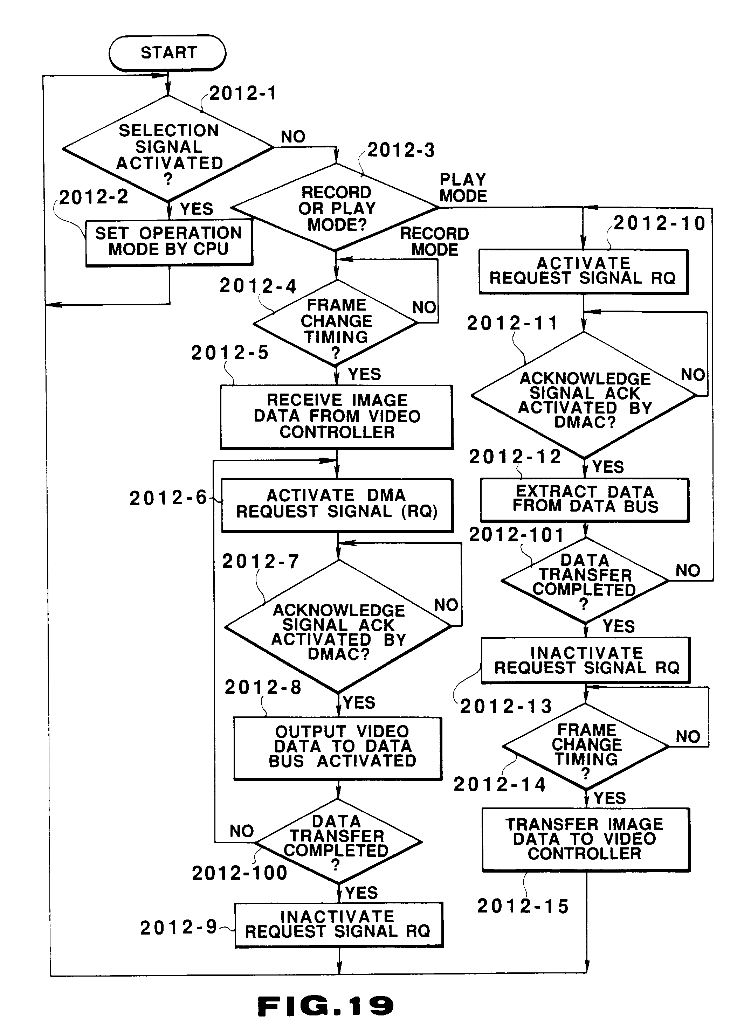

Fig. 19 shows an operation of the video input/output device 2023. This operation, similar to the operations of the audio input/output devices 2022-1 and 2022-2, may be realized by microprogram control or hard logic control. Since most of the operations in the steps of this flow chart are the same as those in Fig. 18, only different operations will be described below.

In the record mode, it is checked in step 2012-4 whether a frame change timing has come. The rate at which this change timing comes varies depending on images to be reproduced in the still-picture display scheme or the motion-picture display scheme. In the motion-picture display scheme, the rate varies depending on whether coarse or fine images are displayed. A signal for determining this rate may be generated by the internal timer of the video input/output device 2023 or by another circuit for generating a special clock.

In any case, YES is obtained in step 2012-4 at the timing at which one-frame data is received from the image controller 2004. In step 2012-5, the one-frame digital image data is input to the video input/output device 2023. The data is then supplied from the video input/output device 2023 to the frame buffer BUF in the buffer section 2024 in step 2012-8 through steps 2012-6 and 2012-7. In this case, since the image data is constituted by a set of a large number of bits (bytes), data transfer between the frame buffer BUF and the video input/output device 2023 is achieved by performing a transfer operation a plurality of times (a large number of times). That is, after step 2012-8, it is checked whether data transfer of the frame data is completed (step 2012-100), and step 2012-6 to step 2012-8 are repeated if NO is obtained in step 2012-100.

In the play mode, in step 2012-12, the one-frame video data is transferred from the frame buffer BUF in the buffer section 2024 to the video input/output device 2023 (by repeating the processing from step 2012-10 to step 2012-101), and the frame data is supplied to the video controller 2004 in synchronism with the frame change timing (step 2012-14). Therefore, on the display device 2005, frames are sequentially changed at a predetermined rate to perform still-picture display or motion-picture display.

Note that if the video data is stored upon compression by a predetermined algorithm, demodulation (expansion) processing is performed by the video controller 2004 in the reproduction mode.

Fig. 20 also shows the reproduction and recording operation timings of the video track (video input/output device 2023).

### <Operation of DMAC 2025>

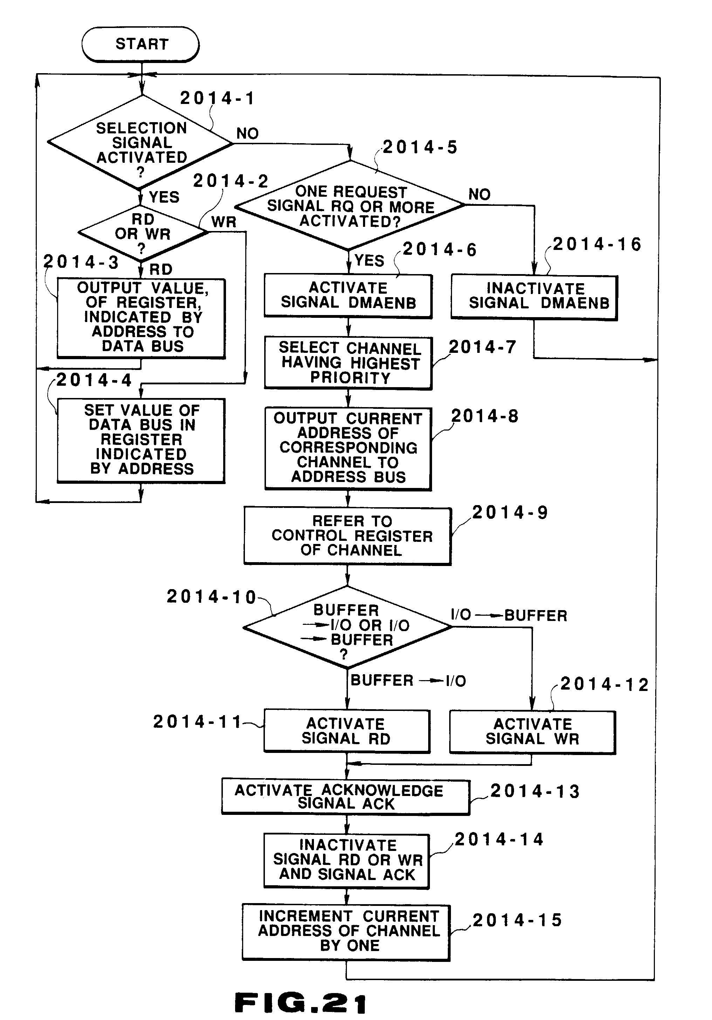

An operation of the DMAC 2025 will be described next with reference to Fig. 21. The flow chart in Fig. 21 may be considered to represent that the service controller 2108 of Fig. 9 is operated by microprogram control or that the function of the DMAC 2025 is realized by a hard logic.

In step 2014-1, it is checked whether a selection signal is supplied from the CPU 2021. If YES in step 2014-1, it is checked in step 2014-2 whether a read RD (read operation) or a write WR (write operation) is designated by the CPU 2021. If the read RD is designated, the contents of registers, of the register sections 2104 and 2105, which are designated by address signals supplied through the address bus are output to be fetched by the CPU 2021 in step 2014-3. In contrast to this, if the write WR is designated, the flow advances to step 2014-4 to input/set desired data in designated registers through the data bus. The processing in step 2014-4 corresponds to the processing in step 2009-5 or the like in the main routine. With this processing in step 2014-4, the desired data is respectively set in the register sections 2104 and 2105.

When such access from the CPU 2021 to the DMAC 2025 and a program are completed, the selection signal is inactivated, and the flow advances from step 2014-1 to step 2014-5.

In step 2014-5, it is checked whether any DMA transfer request signal is supplied from the audio input/output devices 2022-1 and 2022-2, the video input/output device 2023, or the HDC 2026. If it is determined that a request signal is supplied from one of the devices, the flow advances to step 2014-6 to set the signal DMAENB at logic "1" so as to cause the DMAC 2025 to occupy control of the buses (address and data buses), thus inhibiting access from the CPU 2021.

If a plurality of request signals are received, the channels are selected in accordance with the priority order of CH1 > CH2 > CH3 > CH4 (step 2014-7). For example, in the case shown in Fig. 20, even if data transfer requests are simultaneously made with respect to the audio tracks Tr1 and Tr2 and the video track Tr, since the channel CH1 has the highest priority, DMA transfer with respect to the track Tr1 is executed first.

As will be apparent from the later description, since the channel CH4 has the lowest priority, when a data transfer request is made from the audio track Tr (the audio input/output devices 2022-1 and 2022-2) or the video track Tr (the video input/output device 2023) during the execution of data transfer between the hard disk 2008 and any one of the areas of the buffer section 2024, the latter data operation is preferentially performed first (see Fig. 20).

Subsequently, the current address of a selected channel (the contents of the current address register, of the address register section 2104, which correspond to the selected channel) is output to the address bus (step 2014-8). The direction of DMA transfer is then determined by referring to the contents of the control register section 2105 corresponding to the selected channel (step 2014-3). If transfer from a specific area of the buffer section 2024 to another component (I/O) is determined, the flow advances from step 2014-10 to step 2014-11 to supply a read signal RD to the buffer section 2024. In contrast to this, if transfer from another component (I/O) to the buffer section 2024 is determined, the flow advances to step 2014-12 to supply a write signal WR to the corresponding buffer area.

After this operation, the acknowledge signal ACK is activated (step 2014-13). As a result, data transfer between the buffer section 2024 and each track Tr is performed. In step 2014-14, since a data transfer operation is completed, the signals RD, WR, and ACK are inactivated, and the contents of the current address (in the address register section 2104 shown in Fig. 9) of the corresponding channel are incremented by one in step 2014-15. With the operation in step 2014-15, a count-up operation is performed every time new audio data or video data is written in the buffer section 2024 or data is read out therefrom. After the processing in step 2014-15 is completed, the flow returns to step 2014-1.

When such data transfer is completed, the flow advances from step 2014-5 to step 2014-16 to inactivate the DMA enable signal DMAENAB so as to stop the DMAC 2025 from occupying control of the address and data buses in the storing/reproducing section 2002, thus allowing each component in the storing/reproducing section 2002 to receive access from the CPU 2021.

In addition, the DMAC 2025 also performs data transfer between the hard disk 2025 and the buffer section 2024. In this case, the registers, of the address register section 2104 and the control register section 2105, which correspond to the channel CH4 are used. This operation is executed after setting and control operations are performed with respect to the DMAC 2025 and the HDC 2026 upon execution of the interrupt routine (Fig. 17) of the CPU 2021.

More specifically, in response to the processing in step 2010-1 to step 2010-4 in Fig. 17, the DMAC 2025 executes the processing in step 2014-3 and step 2014-4. That is, the CPU 2021 determines a track used for data transfer by the channel 4, and the start address of a buffer corresponding to the track is set in the start address register (in the address register section 2104 in Fig. 9) of the channel CH4. The CPU 2121 obtains number of data transfer operations with respect to the track on the basis of the difference between the start address and the current address (the address incremented after the previous data transfer is performed with respect to the hard disk 2008), and the current address of this track is copied as a start address.

The DMAC 2025 sequentially performs data transfer between areas, of the buffer section 2024, which correspond to tracks in operation, and the hard disk 2008 in units of tracks. That is, data transfer following previous data transfer (block transfer) is performed in units of tracks.

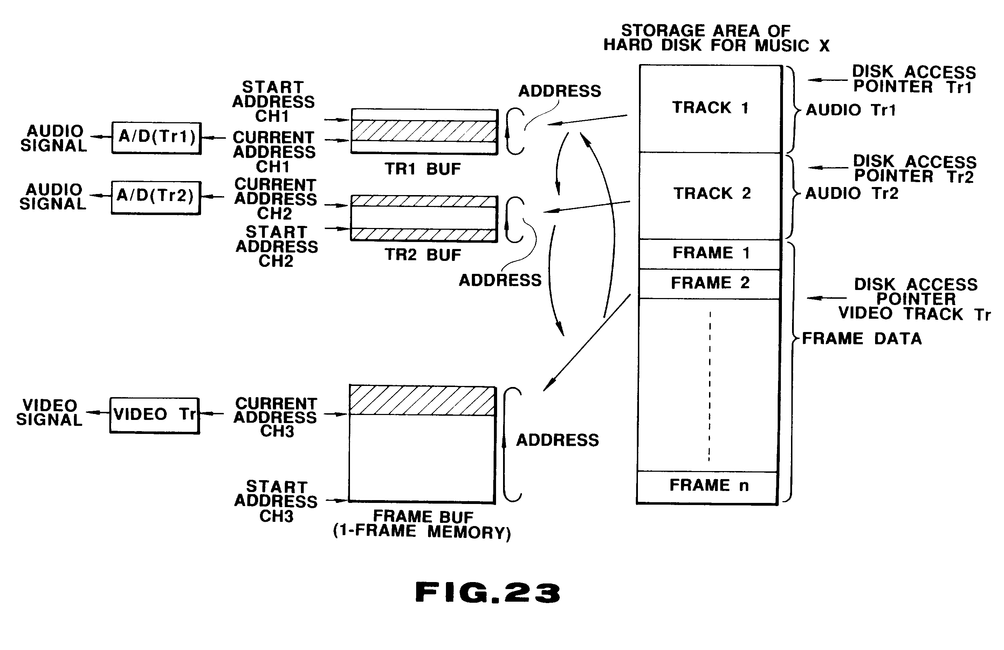

Fig. 23 shows a state wherein audio signals corresponding to two tracks and a video signal corresponding to one track are sequentially read out from specific areas of the hard disk 8. For example, with respect to the track Tr1, data transfer corresponding to a blank portion (which is not hatched) between the start address and current address of the channel CH1 in Fig. 23 is performed. Note that data transfer from the buffer section 2024 to the hard disk 2008 is performed by control operations similar to those described above, even though the direction of data transfer is opposite to the above data transfer. Note that data transfer between the frame buffer BUF and the hard disk 2008 is performed in units of frames.

After programming the HDC 2026 in steps 2010-5 and 2010-6, the CPU 2021 causes the HDC 2026 to generate an actual transfer request signal, thus starting DMA transfer.

Upon detection of the transfer request signal from the HDC 2026 in step 2014-5, the DMAC 2025 executes step 2014-6 to step 2014-9 in the same manner as described above and checks in step 2014-10 whether data transfer from the buffer section 2024 to the hard disk 2008 or data transfer in the opposite direction is requested. If the former is requested, the flow advances to step 2014-11. If the latter is requested, the flow advances to step 2014-12, and the processing in step 2014-13 to 2014-15 is executed. In this case, for example, digital audio data corresponding to one sampling operation or digital video data corresponding to one unit is transferred by one transfer operation. Therefore, block transfer is performed by executing the operations in step 2014-5 to 2014-15 a plurality of times. Since this data transfer between the hard disk 2008 and the buffer section 2024 is closely associated with the operation of the HDC 2026, this transfer operation will be further described later.

When the DMA transfer is completed, the request signal RQ is disabled, and the flow advances from step 2014-5 to step 2014-16 to set the DMA enable signal DMAENB at "0".

### <Operation of HDC 2026>

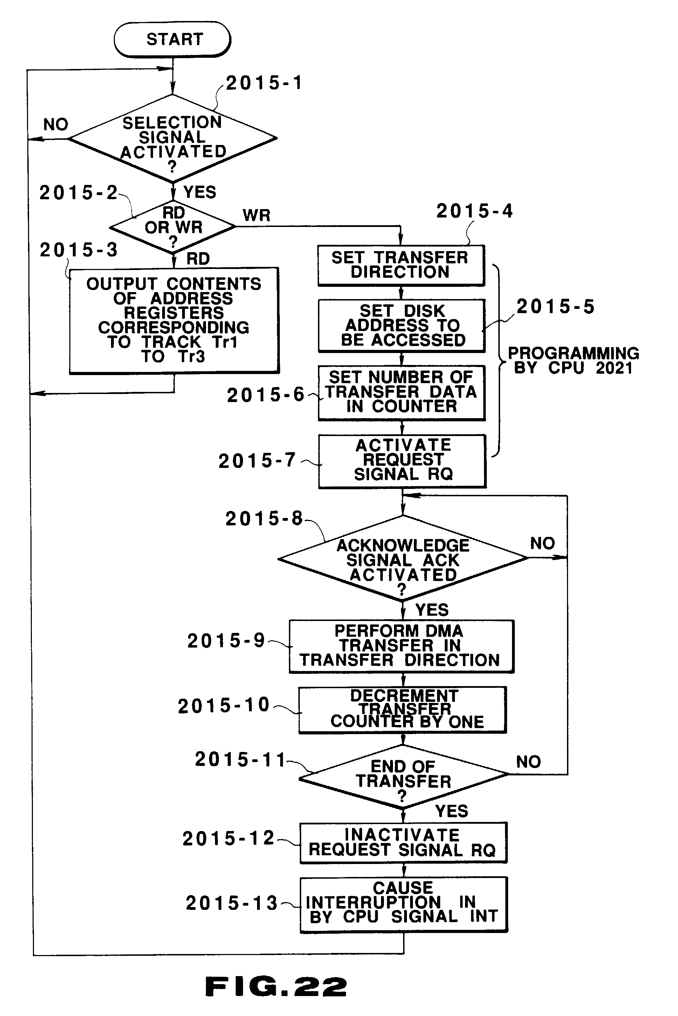

An operation of the HDC 2026 will be described below with reference to Fig. 22. The HDC 2026 may be realized by a hard logic or microgram control scheme. In any case, the function indicated by the flow chart in Fig. 22 can be realized.

It is checked whether a selection signal is supplied from the CPU 2021 (step 2015-1). This signal is supplied by the interrupt routine (steps 2010-5 and 2010-6 in Fig. 17) of the CPU 2021. If NO in step 2015-1, step 2015-1 is repeated. If YES in step 2015-1, the flow advances to step 2015-2 to check whether the read signal RD or the write signal WR is supplied from the CPU 2021. If the read signal RD is supplied, designated data (e.g., the contents of the address register) in the HDC 2026 is output to the CPU 2021 through the data bus in step 2015-3.

If the write signal WR is supplied, the flow advances from step 2015-2 to step 2015-4 to set the direction of DMA transfer between the buffer section 2024 and the hard disk 2008, which is performed by the channel CH4 of the DMAC 2025. In step 2015-5, an access point of the hard disk 2008 to be accessed is set. This operation is performed on the basis of the access pointer of the track obtained from the work RAM 2027 by the CPU 2021 (step 2010-5 in Fig. 17).

Subsequently, in step 2015-6, a transfer data count (digital audio/video data count) is set in the internal counter of the HDC 2026. This data transfer count is obtained in step 2010-6 in the interrupt routine of the CPU 2021 (see Fig. 17).

By executing step 2015-4 and step 2015-6 in this manner, the HDC 2026 is programmed under the control of the CPU 2021. Thereafter, the HDC 2026 requests the DMAC 2025 to perform data transfer (step 2015-7). As is apparent from this description, upon reception of the interrupt signal INT from the HDC 2026, the CPU 2021 executes setting and control operations of DMA transfer corresponding to the next track (i.e., in the order of audio track Tr1, audio track Tr2, video track Tr, audio track Tr1, audio track Tr2,...) with respect to the DMAC 2025, and programs the HDC 2026. Thereafter, the CPU 2021 operates independently of the HDC 2026 and the DMAC 2025, and causes them to execute actual DMA transfer according to interaction therebetween.

The flow then advances from step 2015-7 to step 2015-8, and the HDC 2026 repeats step 2015-8 until it receives the acknowledge signal ACK from the DMAC 2025 (see step 2014-13 in Fig. 21).

If YES in step 2015-8, the flow advances to step 2015-9, in which digital audio data corresponding to one sampling operation or digital video data corresponding to one unit amount is transferred by the operation of the channel CH4 of the DMAC 2025. Thereafter, a transfer counter set in step 2015-6 is decremented by one (step 2015-10). In step 2015-11, completion of data transfer corresponding to the preset transfer data count is judged on the basis of the contents of the transfer counter. If NO in step 2015-11, the flow returns to step 2015-8. Therefore, the DMAC 2025 keeps receiving the transfer request signal RQ until transfer (block transfer) corresponding to the data count set by the HDC 2026 is completed. Consequently, the DMAC 2025 executes the processing from step 2014-5 to step 2014-15 (Fig. 21) in accordance with the request, and the HDC 2026 executes the processing from step 2015-8 to step 2015-11 accordingly.

If the completion of the data transfer is determined in step 2015-11, the flow advances to step 2015-12 to inactivate the data transfer request signal RQ from the HDC 2026 to the DMAC 2025. Thereafter, the HDC 2026 supplies the interrupt signal INT to the CPU 2021 (step 2015-13) to perform data transfer with respect to the next track between the hard disk 2008 and an area, of the buffer section 2024, which corresponds to the track with the next higher priority. As described above, in response to the interrupt signal INT, the CPU 2021 executes the interrupt routine (Fig. 17).

### <Data transfer operation between hard disk 2008 and buffer section 2024>

Data transfer between the hard disk 2008 and the buffer section 2024 should be understood from the above description. The manner in which DMA request signals are supplied to the DMAC 2025 and the DMAC 2025 responds to them in a time-divisional manner will be described below with reference to Fig. 20.

As has been described above, data transfer request signals are output from the audio input/output devices 2022-1 and 2022-2 to the DMAC 2025 at every sampling timing fs. In addition, a data transfer request signal is output from the video input/output device 2023 at the frame change timing. These request signals are also generated, for example, when the CPU 2021 is programming the HDC 2026 (step 2010-5 and step 2010-6 in Fig. 17 and step 2015-4 and step 2015-7 in Fig. 22). In response to data transfer request signals from the audio input/output devices 2022-1 and 2022-2 and the video input/output device 2023, the DMAC 2025 outputs the DMA enable signals EMAENB (step 2014-6 in Fig. 21), as described above, and interrupts programming of the HDC 2026 by the CPU 2021. After DMA transfer through the channels CH1 to CH3 is completed, the DMAC 2025 causes the CPU 2021 to resume programming (Fig. 20).

In addition, while data is sequentially transferred between the hard disk 2008 and the buffer section 2024 by DMA transfer through the channel CH4, data transfer request signals are output from the audio input/output devices 2022-1 and 2022-2 in the same manner as described above.

In this case, the DMAC 2025 performs data transfer through one of the channels (CH1 to CH3) which is determined in step 2014-7 in Fig. 21 to have the highest priority. During this period, although a data transfer request signal is kept output from the HDC 2026 to the DMAC 2025 (see step 2015-7 in Fig. 22), the acknowledge signal ACK is not supplied from the DMAC 2025. Therefore, the flow waits for the next data transfer (step 2015-8 is repeated).

From a macroscopic viewpoint, therefore, the DMAC 2025 repeats DMA transfer between an area of the hard disk 2008 and a corresponding area of the buffer section 2024. However, from a microscopic viewpoint, DMA transfer between the buffer section 2024 and the audio input/output devices 2022-1 and 2022-2 and the video input/output device 2023 is executed by the channels CH1 to CH3 during programming of the HDC 2026, actual DMA transfer (by the channel CH4), or a pause, thereby performing accurate data transfer at the sampling period or the frame change timing.

### <Operation of CPU 2021 of storing/reproducing section 2002: edit mode>

The CPU 2021 can edit the audio data or video data stored in the hard disk 2008 with the above-described operation in accordance with commands from the computer section 2001. Each data stored in the hard disk 2008 can be registered as one event with an arbitrary unit length in accordance with an operation of the keyboard and mouse 2012 (step 2009-8 in Fig. 16).

Audio data/video data converted into events in this manner are arranged in correspondence with the measure numbers of sequencer data which have been previously stored by a performance input (step 2009-9). With this operation, audio data and video data generated in units of measures of a music can be reproduced in an order and at timings different from the input/storage order and timings. For example, if video data of a plurality of still pictures are recorded in advance, they can be switched/reproduced in units of measures. In addition, if motion-picture data is recorded in advance, they can be extracted/reproduced in accordance with the length of each measure.

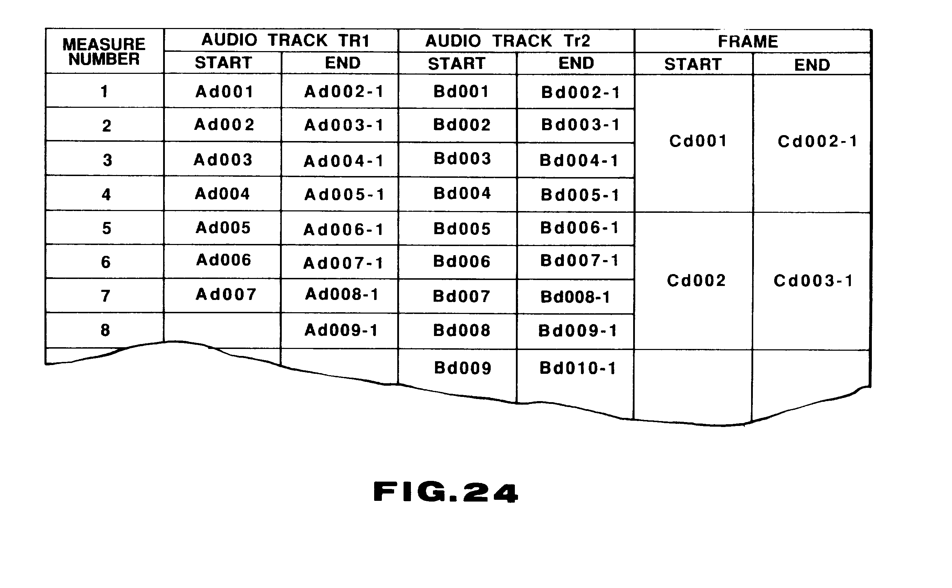

In step 2009-10, a schedule table for music obtained by such edit processing is stored in the hard disk 2008. Fig. 24 shows a schedule table for one music, which indicates the addresses, of audio data to be reproduced through the audio tracks Tr1 and Tr2, on the hard disk 2008, and the addresses, of video data to be reproduced through the video track Tr, on the hard disk 2008, in units of measure numbers. In this case, at the first measure, audio data at addresses Ad001 to Ad002-1 of the hard disk 2008 are read out for the audio track Tr1, and audio data at addresses Bd001 to Bd002-1 of the hard disk 2008 are read out for the audio track Tr2. It is apparent that the time required for reproduction of each of these data is caused to correspond to the duration of a corresponding measure. Similarly, voice is designated in units of measures. In contrast to this, for the video track Tr, one-frame data stored at addresses Cd001 to Cd002-1 of the hard disk 2008 at the first to fourth measures is reproduced. Similarly, video data is read out in units of a plurality of measures.

It is apparent that audio data, video data, and a music can be arranged in association with each other in units of measures or in various time units, and their relationship can be variously changed.

By performing such edit processing with respect to a plurality of music, as shown in Fig. 12, schedule table data of the respective music (music pieces 1, 2, 3,...), sequencer data (multitrack arrangement), audio data (Tr1, Tr2), and video data (multi-frame arrangement) are stored in the hard disk 2008.

### <Operation of CPU 2021 of storing/reproducing section 2002: music reproduction mode>

Of the operations of the CPU 2021 of the storing/reproducing section 2002, the music reproduction mode will be described below. This mode is performed in synchronism with step 2003-11 for the automatic performance control by the computer section 2001 described with reference to Figs. 10 and 11. When this mode is designated by the computer section 2001, the CPU 2021 causes the flow to advance from step 2009-2 to step 2009-11 in Fig. 11. In step 2009-11, a music number and measures to be reproduced are received from the CPU 2011 of the computer section 2001 (see step 2004-2 in Fig. 16). In step 2009-12, the schedule table for the designated music is read out and set in the work RAM 2027. Therefore, a reproducing operation (reproduction order and timing) of the storing/reproducing section 2002 with respect to each track is performed on the basis of the contents of this schedule table.

In step 2009-13, the sequencer data for the music is read out from the hard disk 2008 and is stored in the performance data memory 2015 through the CPU 2011. This operation is associated with the operation in step 2004-3 in Fig. 11, executed by the CPU 2011.

In step 2009-14, the first block data of the music is transferred to the reproduced audio buffers of the buffer section 2024. In step 2009-15, the first frame data is transferred to the frame buffer of the buffer section 2024. In step 2009-16, initial values are respectively set in the channels of the DMAC 2025.

Since the operations from step 2009-14 to step 2009-16 are the same as those from step 2009-4 and 2009-5 described above, a further description thereof will be omitted. After such initial setting is performed, in response to an inquiry from the CPU 2011 of the computer section 2001 (step 2004-4 in Fig. 11), the CPU 2021 outputs an acknowledge signal representing that the preparation for an automatic performance is completed (step 2009-17).

In response to a start command from the CPU 2011 of the computer section 2001 (see step 2004-6 in Fig. 11), the CPU 2021 starts the performance. This operation is the same as that in step 2009-6 in the AV input/output mode. Thereafter, similar to the processing in the AV input/output mode, the CPU 2021 executes the interrupt processing in Fig. 17 to start a reproducing operation of the audio and video data. In synchronism with this operation, the computer section 2001 starts the automatic performance of the music.

During this reproduction operation of the audio and video data, the CPU 2021 checks whether a command is supplied from the CPU 2011 (step 2009-20). If a command is supplied, the flow advances to step 2009-21 to check whether the command is an end command for the performance (audio/video data reproducing operation). If YES in step 2009-21, the CPU 2021 supplies a reproduction end command to each component of the storing/reproducing section 2002 to end the reproducing operation (step 2009-22), thus completing the performance.

If NO in step 2009-21, the CPU 2021 interrupts the DMA processing by the DMAC 2025 and performs corresponding processing/control (step 2009-23). Thereafter, the CPU 2021 resumes the operation (executes the interrupt routine in Fig. 17) to continue the performance.

In this manner, the performance data of a plurality of music pieces stored/set beforehand in the hard disk 2008 are selectively read out in accordance with an operation of the keyboard and mouse 2012 and are stored in the performance data memory 2015 of the computer section 2001. The data is then used for an automatic performance. In accordance with this operation, audio data and video data associated with the selected music are read out from the hard disk 2008 and are temporarily stored in the corresponding areas of the buffer section 2024 so as to be output, as two-track audio signals, from the audio input/output devices 2022-1 and 2022-2. In addition, the stored data is supplied, as video signals, to the video controller through the video input/output device 2023 so as to be displayed, as still pictures or motion pictures, on the display device 2005.

As described above, in the automatic performance apparatus having the above-described arrangement, audio and video data can be easily reproduced in accordance with a musical performance based on performance data.

In addition, performance data, audio data, and video data can be integrated to be stored/set in a memory means so that the respective data can be easily extracted in accordance with the selection of a music. Furthermore, a user can easily edit these data as integral data.

## Claims

1. A multimedia recorder comprising:
first input/output means (1009; 2022-1, 2022-2) for performing an input/output operation for a first type of data;
second input/output means (1010, 1011; 2023) for performing an input/output operation for data having a type of data different from the first type;
buffer means (1007; 2024) for performing data transfer to said first and second input/output means to store data in units of the first and second types;
random access type external memory means (1008, 1012; 2008, 2026) for transferring the first and second types of data from the memory means (1012; 2008) to said buffer means (1007; 2024), the external memory means having storage areas from/in which the first and second types of data are read/written; and
data transfer means (1006; 2025) for executing data transfer between said first and second input/output means, said buffer means and said external memory means,
*characterized in that*
said data transfer means (1006; 2025) time-divisionally executes data transfer between said first and second input/output means and said buffer means (1007; 2024) and data transfer between the said buffer means and said external memory means (1012; 2008) in a predetermined priority order.

2. A recorder according to claim 1, *characterized in that* said first input/output means (1009; 2022-1, 2022-2) includes means for executing an input/output operation for audio data, and means for recording/reproducing the audio data stored in said buffer means (1007; 2024) in synchronism with a sampling timing.

3. A recorder according to claim 1, *characterized in that* said second input/output means (1011; 2023) includes means for executing an input/output operation for video data, and means for recording/reproducing the video data stored in said buffer means (1007; 2024) in synchronism with a sampling timing.

4. A recorder according to claim 1, *characterized in that* said second input/output means (1010) includes means for executing an input/output operation for sequencer data, and means for recording/reproducing the sequencer data stored in said buffer means (1007) in synchronism with a change timing of the sequencer data.

5. A recorder according to claim 1, *characterized in that* each of said first and second input/output means (1009 - 1011; 2022-1, 2022-2, 2023) comprises request means for requesting said data transfer means (1006; 2025) to perform data transfer between said buffer means and said first and second input/output means, said data transfer means executing transfer of corresponding data in response to the request from said request means.

6. A recorder according to claim 1, *characterized in that* said external memory means (1012; 2008) comprises request means (1008; 2026) for requesting said data transfer means to perform data transfer between said buffer means and said external memory means, said data transfer means (1006; 2025) executing transfer of corresponding data in response to the request from said request means.

## Patentansprüche

1. Multimedia-Aufzeichnungsgerät, das aufweist:
eine erste Eingabe/Ausgabeeinrichtung (1009; 2022-1, 2022-2) zum Durchführen eines Eingabe/Ausgabevorgangs für einen ersten Datentyp;
eine zweite Eingabe/Ausgabeeinrichtung (1010, 1011; 2023) zum Durchführen eines Eingabe/Ausgabevorgangs für Daten, die einen zu dem ersten Typ unterschiedlichen Datentyp aufweisen;
eine Puffereinrichtung (1007; 2024) zum Durchführen einer Datenübertragung zu der ersten und zweiten Eingabe/Ausgabeeinrichtung, um Daten in Einheiten der ersten und zweiten Typen zu speichern;
eine externe Speichereinrichtung (1008, 1012; 2008, 2026) eines Direktzugrifftyps zum Übertragen der ersten und zweiten Datentypen von der Speichereinrichtung (1012; 2008) zu der Puffereinrichtung (1007; 2024), wobei die externe Speichereinrichtung Speicherbereiche aufweist, aus welchen/in welche die ersten und zweiten Datentypen gelesen/geschrieben werden; und
eine Datenübertragungseinrichtung (1006; 2025) zum Durchführen einer Datenübertragung zwischen der ersten und zweiten Eingabe/Ausgabeeinrichtung, der Puffereinrichtung und der externen Speichereinrichtung, *dadurch gekennzeichnet, daß*
die Datenübertragungseinrichtung (1006; 2025) eine Datenübertragung zwischen der ersten und zweiten Eingabe/Ausgabeeinrichtung und der Puffereinrichtung (1007; 2024) und eine Datenübertragung zwischen der Puffereinrichtung und der externen Speichereinrichtung (1012; 2008) in einer vorbestimmten Wertigkeitsfolge zeitlich verschachtelt durchführt.

2. Aufzeichnungsgerät nach Anspruch 1, *dadurch gekennzeichnet, daß* die erste Eingabe/Ausgabeeinrichtung (1009; 2022-1, 2022-2) eine Einrichtung zum Durchführen eines Eingabe/Ausgabevorgangs für Audiodaten und eine Einrichtung zum Aufzeichnen/Wiedergeben der in der Puffereinrichtung (1007; 2024) gespeicherten Audiodaten synchron zu einem Abtastzeitpunkt beinhaltet.

3. Aufzeichnungsgerät nach Anspruch 1, *dadurch gekennzeichnet, daß* die zweite Eingabe/Ausgabeeinrichtung (1011; 2023) eine Einrichtung zum Durchführen eines Eingabe/Ausgabevorgangs für Videodaten und eine Einrichtung zum Aufzeichnen/Wiedergeben der in der Puffereinrichtung (1007; 2024) gespeicherten Videodaten synchron zu einem Abtastzeitpunkt beinhaltet.

4. Aufzeichnungsgerät nach Anspruch 1, *dadurch gekennzeichnet, daß* die zweite Eingabe/Ausgabeeinrichtung (1010) eine Einrichtung zum Durchführen eines Eingabe/Ausgabevorgangs für Ablaufsteuerungsdaten und eine Einrichtung zum Aufzeichnen/Wiedergeben der in der Puffereinrichtung (1007) gespeicherten Ablaufssteuerungsdaten synchron zu einem Änderungszeitpunkt der Ablaufsteuerungsdaten beinhaltet.

5. Aufzeichnungsgerät nach Anspruch 1, *dadurch gekennzeichnet, daß* die erste und zweite Eingabe/Ausgabeeinrichtung (1009 bis 1011; 2022-1, 2022-2, 2023) eine Anforderungseinrichtung zum Anfordern aufweist, daß die Datenübertragungseinrichtung (1006, 2025) die Datenübertragung zwischen der Puffereinrichtung und der ersten und zweiten Eingabe/Ausgabeeinrichtung durchführt, wobei die Datenübertragungseinrichtung eine Übertragung von entsprechenden Daten als Reaktion auf die Anforderung von der Anforderungseinrichtung durchführt.

6. Aufzeichnungsgerät nach Anspruch 1, *dadurch gekennzeichnet, daß* die externe Speichereinrichtung (1012; 2008) eine Anforderungseinrichtung (1008; 2026) zum Anfordern aufweist, daß die Datenübertragungseinrichtung eine Datenübertragung zwischen der Puffereinrichtung und der externen Speichereinrichtung durchführt, wobei die Datenübertragungseinrichtung (1006; 2025) eine Übertragung von entsprechenden Daten als Reaktion auf die Anforderung von der Anforderungseinrichtung durchführt.

## Revendications

1. Un enregistreur multimédia comprenant :
des premiers moyens d'entrée/sortie (1009; 2022-1, 2022-2) pour effectuer une opération d'entrée/sortie sur un premier type de données;
des seconds moyens d'entrée/sortie (1010, 1011; 2023) pour effectuer une opération d'entrée/sortie pour des données ayant un type de données différent du premier type;
des moyens tampons (1077; 2024) pour effectuer un transfert de données vers les premiers et seconds moyens d'entrée/sortie pour enregistrer des données par unités des premier et second types;
des moyens de mémoire externes du type à accès direct (1008, 1012; 2008, 2026) pour transférer les premier et second types de données à partir des moyens de mémoire (1012; 2008) vers les moyens tampons (1007; 2024), les moyens de mémoire externes ayant des zones d'enregistrement à partir desquelles les premier et second types de données sont lus et dans lesquels ils sont écrits; et
des moyens de transfert de données (1006; 2025) pour exécuter un transfert de données entre les premiers et seconds moyens d'entrée/sortie, les moyens tampons et les moyens de mémoire externes,
caractérisé en ce que
les moyens de transfert de données (1006; 2025) exécutent en répartition dans le temps un transfert de données entre les premiers et seconds moyens d'entrée/sortie et les moyens tampons (1007; 2024), et un transfert de données entre les moyens tampons et les moyens de mémoire externes (1012; 2008), avec un ordre de priorité prédéterminé.

2. Un enregistreur selon la revendication 1, caractérisé en ce que les premiers moyens d'entrée/sortie (1009; 2022-1, 2022-2) comprennent des moyens pour exécuter une opération d'entrée/sortie pour des données audio, et des moyens pour enregistrer/reproduire les données audio qui sont enregistrées dans les moyens tampons (1007; 2024), en synchronisme avec des instants d'échantillonnage.

3. Un enregistreur selon la revendication 1, caractérisé en ce que les seconds moyens d'entrée/sortie (1011; 2023) comprennent des moyens pour exécuter une opération d'entrée/sortie pour des données vidéo, et des moyens pour enregistrer/reproduire les données vidéo qui sont enregistrées dans les moyens tampons (1007; 2024), en synchronisme avec des instants d'échantillonnage.

4. Un enregistreur selon la revendication 1, caractérisé en ce que les seconds moyens d'entrée/sortie (1010) comprennent des moyens pour exécuter une opération d'entrée/sortie pour des données de séquenceur, et des moyens pour enregistrer/reproduire les données de séquenceur qui sont enregistrées dans les moyens tampons (1007), en synchronisme avec des instants de changement des données de séquenceur.

5. Un enregistreur selon la revendication 1, caractérisé en ce que chacun des premiers et seconds moyens d'entrée/sortie (1009 - 1011; 2022-1, 2022-2, 2023) comprend des moyens de demande pour demander aux moyens de transfert de données (1006; 2025) d'effectuer un transfert de données entre les moyens tampons et les premiers et seconds moyens d'entrée/sortie, les moyens de transfert de données exécutant un transfert de données correspondantes en réponse à la demande provenant des moyens de demande.

6. Un enregistreur selon la revendication 1, caractérisé en ce que les moyens de mémoire externes (1012; 2008) comprennent des moyens de demande (1008; 2026) pour demander aux moyens de transfert de données d'effectuer un transfert de données entre les moyens tampons et les moyens de mémoire externes, les moyens de transfert de données (1006; 2025) exécutant un transfert de données correspondantes en réponse à la demande provenant des moyens de demande.
